# EUROPEAN PATENT APPLICATION

(11) **EP 4 814 359 A1**
(43) Date of publication of application: **30.09.2026**
(21) Application number: 24893933.2
(22) Date of filing: 24.10.2024
(51) Int. Cl.: F16L 33/22, F16L 17/02

(54) **PIPE JOINT STRUCTURE AND METHOD FOR CONSTRUCTING PIPE JOINT STRUCTURE**

(30) Priority: 24.11.2023 JP 2023198949; 29.03.2024 WO PCT/JP2024/013055
(71) Applicant: Pillar Corporation, Osaka-shi, Osaka 550-0013 (JP)
(72) Inventor: ITO, Yoshihiro, Osaka-shi, Osaka 550-0013 (JP); MINAMIHARA, Shohei, Osaka-shi, Osaka 550-0013 (JP); TANABE, Hiroki, Osaka-shi, Osaka 550-0013 (JP)
(74) Representative: Parker, Andrew James
(86) International application number: PCT/JP2024/038034
(87) International publication number: WO 2025/109940

(57) **Abstract**

A pipe joint of the present invention includes: an outer joint pipe having a first inner circumferential surface portion on one axial side and a second inner circumferential surface portion on another axial side, an outer circumferential surface of a pipe being fitted onto the first inner circumferential surface portion from the one axial side; an inner joint pipe having, on the one axial side, a first outer circumferential surface portion that is fitted onto an inner circumferential surface of the pipe from the other axial side, having, on the other axial side, a second outer circumferential surface portion that is fitted onto the second inner circumferential surface portion from the other axial side, and having, on the other axial side, an end portion that is connected to a fluid device; an annular seal member provided on the first outer circumferential surface portion and configured to seal between the first outer circumferential surface portion and the inner circumferential surface of the pipe; a first restricting portion configured to restrict relative movement of the pipe with respect to the first inner circumferential surface portion toward the one axial side when the outer circumferential surface of the pipe is fitted onto the first inner circumferential surface portion; and a second restricting portion configured to restrict relative movement of the inner joint pipe with respect to the second inner circumferential surface portion toward the other axial side when the second outer circumferential surface portion is fitted onto the second inner circumferential surface portion.

## Description

### TECHNICAL FIELD

The present invention relates to a pipe joint structure and a construction method for the pipe joint structure. This application claims priority on Japanese Patent Application No. 2023-198949 filed on November 24, 2023, and International Patent Application PCT/JP2024/013055 filed on March 29, 2024, the entire contents of which are incorporated herein by reference.

### BACKGROUND ART

In manufacturing apparatuses in various technical fields such as semiconductor manufacturing and medical/pharmaceutical manufacturing, a pipe joint described in PATENT LITERATURE 1 is known as a connection structure for connecting a pipe such as a tube to a flow passage of a fluid device such as fluid equipment. The pipe joint in PATENT LITERATURE 1 includes an inner ring mounted on the inner circumference of an end portion of a tube, a joint body mounted on the outer circumference of the end portion of the tube, and a union nut having an internal thread that is tightened onto an external thread formed on the outer circumference of the joint body.

When connecting the tube to the above pipe joint, the worker press-fits the inner ring into the inner circumference of the end portion of the tube and mounts the joint body on the outer circumference of the end portion of the tube, and in this state, the worker tightens the internal thread of the union nut onto the external thread of the joint body. Accordingly, sealing performance between the joint body and the tube is ensured, and the end portion of the tube can also be inhibited from being pulled out from the joint body.

### CITATION LIST

### PATENT LITERATURE

PATENT LITERATURE 1: Japanese Laid-Open Patent Publication JP 2021 - 195 959 A

### SUMMARY OF THE INVENTION

### TECHNICAL PROBLEM

In the above pipe joint, a tool such as a wrench is required when tightening the union nut onto the joint body. Therefore, in locations where the working space is limited, it may be impossible to tighten the union nut using a tool. In addition, it is necessary to perform torque management such that the tightening amount of the union nut falls within an appropriate range. Since this torque management requires a certain level of skill, there is also a problem that the number of workers that can perform the work of tightening the union nut is limited.

An object of the present invention is to provide a pipe joint structure that allows a pipe to be easily connected without using a tool, and a construction method for the pipe joint structure.

### SOLUTION TO PROBLEM

(1) A pipe joint structure of the present invention is a pipe joint structure for connecting a pipe to a flow passage formed in a fluid device, the pipe joint structure including: an outer joint pipe having a first inner circumferential surface portion on one axial side and a second inner circumferential surface portion on another axial side, an outer circumferential surface of the pipe being fitted onto the first inner circumferential surface portion from the one axial side; an inner joint pipe having, on the one axial side, a first outer circumferential surface portion that is fitted onto an inner circumferential surface of the pipe from the other axial side, having, on the other axial side, a second outer circumferential surface portion that is fitted onto the second inner circumferential surface portion of the outer joint pipe from the other axial side, and having, on the other axial side, an end portion that is connected to the fluid device; an annular seal member provided on the first outer circumferential surface portion of the inner joint pipe and configured to seal between the first outer circumferential surface portion and the inner circumferential surface of the pipe; a first restricting portion configured to restrict relative movement of the pipe with respect to the first inner circumferential surface portion toward the one axial side when the outer circumferential surface of the pipe is fitted onto the first inner circumferential surface portion of the outer joint pipe; and a second restricting portion configured to restrict relative movement of the inner joint pipe with respect to the second inner circumferential surface portion toward the other axial side when the second outer circumferential surface portion of the inner joint pipe is fitted onto the second inner circumferential surface portion of the outer joint pipe.
   According to the pipe joint structure of the present invention, by relatively inserting the pipe into the inner circumferential side of the outer joint pipe from the one axial side, the outer circumferential surface of the pipe is fitted onto the first inner circumferential surface portion of the outer joint pipe. Accordingly, the first restricting portion can restrict the relative movement of the pipe with respect to the first inner circumferential surface portion of the outer joint pipe toward the one axial side. In this state, by relatively inserting the inner joint pipe into the inner circumferential side of the outer joint pipe from the other axial side, the first outer circumferential surface portion of the inner joint pipe is fitted onto the inner circumferential surface of the pipe, and the second outer circumferential surface portion of the inner joint pipe is fitted onto the second inner circumferential surface portion of the outer joint pipe. Accordingly, the seal member seals between the first outer circumferential surface portion of the inner joint pipe and the inner circumferential surface of the pipe, and the second restricting portion can restrict the relative movement of the inner joint pipe with respect to the second inner circumferential surface portion of the outer joint pipe toward the other axial side. Therefore, the worker can easily connect the pipe to the pipe joint structure without using a tool, simply by relatively inserting the pipe into the inner circumferential side of the outer joint pipe from the one axial side, and then relatively inserting the inner joint pipe into the inner circumferential side of the outer joint pipe from the other axial side.
(2) According to another aspect, the pipe joint structure of the present invention is a pipe joint structure for connecting a pipe to a flow passage formed in a fluid device, the pipe joint structure including: an outer joint pipe having a first inner circumferential surface portion on one axial side and a second inner circumferential surface portion on another axial side, an outer circumferential surface of the pipe being fitted onto the first inner circumferential surface portion; an inner joint pipe having, on the one axial side, a first outer circumferential surface portion that is fitted onto an inner circumferential surface of the pipe from the other axial side, having, on the other axial side, a second outer circumferential surface portion that is fitted onto the second inner circumferential surface portion of the outer joint pipe from the other axial side, and having, on the other axial side, an end portion that is connected to the fluid device; an annular seal member provided on the first outer circumferential surface portion of the inner joint pipe and configured to seal between the first outer circumferential surface portion and the inner circumferential surface of the pipe; a first restricting portion configured to restrict relative movement of the pipe with respect to the first inner circumferential surface portion toward the one axial side when the outer circumferential surface of the pipe is fitted onto the first inner circumferential surface portion of the outer joint pipe; and a second restricting portion configured to restrict relative movement of the inner joint pipe with respect to the second inner circumferential surface portion toward the other axial side when the second outer circumferential surface portion of the inner joint pipe is fitted onto the second inner circumferential surface portion of the outer joint pipe, wherein the outer joint pipe is composed of a plurality of split bodies that are split in a circumferential direction.

According to the pipe joint structure of the present invention, the outer circumferential surface of the pipe is fitted onto the first inner circumferential surface portion of the outer joint pipe by placing the one axial side of each of the plurality of split bodies, which constitute the outer joint pipe, on the radially outer side of the outer circumferential surface of the pipe, and combining the plurality of split bodies in the circumferential direction. Accordingly, the first restricting portion can restrict the relative movement of the pipe with respect to the first inner circumferential surface portion of the outer joint pipe toward the one axial side. In this state, by relatively inserting the inner joint pipe into the inner circumferential side of the outer joint pipe from the other axial side, the first outer circumferential surface portion of the inner joint pipe is fitted onto the inner circumferential surface of the pipe, and the second outer circumferential surface portion of the inner joint pipe is fitted onto the second inner circumferential surface portion of the outer joint pipe. Accordingly, the seal member seals between the first outer circumferential surface portion of the inner joint pipe and the inner circumferential surface of the pipe, and the second restricting portion can restrict the relative movement of the inner joint pipe with respect to the second inner circumferential surface portion of the outer joint pipe toward the other axial side. Therefore, the worker can easily connect the pipe to the pipe joint structure without using a tool, simply by fitting the outer circumferential surface of the pipe to the inner circumferential side of the outer joint pipe, and then relatively inserting the inner joint pipe into the inner circumferential side of the outer joint pipe from the other axial side.

Further, in the pipe joint structure of (1) above, for example, when a portion of the first restricting portion protrudes radially inward from the inner circumferential side of the outer joint pipe, it is necessary to insert the tube while deforming the insertion end portion of the tube when relatively inserting the pipe into the inner circumferential side of the outer joint pipe from the one axial side. Therefore, a pipe made of a material that is hard to deform such as metal cannot be connected to the pipe joint structure. In contrast, in the pipe joint structure of (2) above, the outer circumferential surface of the pipe can be fitted onto the first inner circumferential surface portion of the outer joint pipe without being obstructed by the portion of the first restricting portion, by combining the plurality of split bodies in the circumferential direction on the radially outer side of the outer circumferential surface of the pipe as described above. Therefore, when fitting the outer circumferential surface of the pipe onto the first inner circumferential surface portion of the outer joint pipe, it is not necessary to deform the pipe. Thus, even a pipe made of a material that is hard to deform can be connected to the pipe joint structure.

(3) In the pipe joint structure of (1) or (2) above, preferably, the first restricting portion has an engagement projection provided on one of the first inner circumferential surface portion of the outer joint pipe and the outer circumferential surface of the pipe, and an engagement groove provided on the other, and the relative movement of the pipe is restricted when the engagement projection engages with the engagement groove.

In this case, since the first restricting portion is configured such that the engagement projection engages with the engagement groove, the first restricting portion can reliably restrict the relative movement of the pipe with respect to the outer joint pipe.

(4) In the pipe joint structure of (3) above, preferably, the engagement groove is located on the other axial side with respect to the seal member.

For example, when the engagement groove of the first restricting portion is formed so as to penetrate in the thickness direction of the pipe, there is a possibility that a fluid within the pipe may pass between the pipe and the outer joint pipe from the engagement groove and leak to the one axial side of the outer joint pipe. Therefore, it becomes necessary to provide, separately from the seal member, a seal structure for suppressing leakage of the fluid. However, in (3) above, since the engagement groove is located on the other axial side with respect to the seal member which seals between the pipe and the outer joint pipe, the seal member can inhibit the fluid within the pipe from leaking from the engagement groove to the one axial side of the outer joint pipe. Accordingly, it is not necessary to additionally provide the seal structure, and thus the configuration of the pipe joint structure can be simplified.

(5) In the pipe joint structure of any of (1) to (4) above, preferably, the second restricting portion has a hook portion integrally provided on one of the second inner circumferential surface portion of the outer joint pipe and the second outer circumferential surface portion of the inner joint pipe, and a hook groove provided on the other, and the relative movement of the inner joint pipe is restricted when the hook portion is caught in the hook groove.

In this case, since the second restricting portion is configured such that the hook portion is caught in the hook groove, the second restricting portion can reliably restrict the relative movement of the inner joint pipe with respect to the outer joint pipe. In addition, since the hook portion is integrally provided on the second outer circumferential surface portion of the inner joint pipe or the second inner circumferential surface portion of the outer joint pipe, the configuration of the pipe joint structure can be simplified.

(6) In the pipe joint structure of any of (1) to (4) above, preferably, the second restricting portion has a locking portion that is provided on the outer joint pipe as a component separate from the outer joint pipe and is configured to be capable of protruding inward in a radial direction with respect to the second inner circumferential surface portion, and a locking groove provided on the second outer circumferential surface portion of the inner joint pipe, and the relative movement of the inner joint pipe is restricted when the locking portion protrudes inward in the radial direction and locks into the locking groove.

In this case, since the second restricting portion is configured such that the locking portion is caught in the locking groove, the second restricting portion can reliably restrict the relative movement of the inner joint pipe with respect to the outer joint pipe.

(7) A construction method for the pipe joint structure of the present invention is a construction method for connecting, to the pipe joint structure of (1) above for connecting a pipe to a flow passage formed in a fluid device, the pipe, the construction method including, in the order stated: a step of relatively inserting the pipe into an inner circumferential side of the outer joint pipe from the one axial side of the outer joint pipe and fitting an outer circumferential surface of the pipe onto the first inner circumferential surface portion of the outer joint pipe; and a step of relatively inserting the inner joint pipe into the inner circumferential side of the outer joint pipe from the other axial side of the outer joint pipe, fitting the first outer circumferential surface portion of the inner joint pipe onto an inner circumferential surface of the pipe, and fitting the second outer circumferential surface portion of the inner joint pipe onto the second inner circumferential surface portion of the outer joint pipe.

According to the construction method for the pipe joint structure of the present invention, the same advantageous effects as those of the pipe joint structure of (1) above are achieved.

(8) Preferably, the pipe joint structure of (2) above further includes a fixing portion configured to fix the split bodies adjacent to each other in the circumferential direction.

In this case, since the split bodies of the outer joint pipe adjacent to each other in the circumferential direction are fixed to each other by the fixing portion, each split body of the outer joint pipe can be inhibited from falling off from the outer circumferential surface of the pipe and the second outer circumferential surface portion of the inner joint pipe.

(9) In the pipe joint structure of (8) above, preferably, the fixing portion has a projecting portion protruding from one split body toward another split body of the split bodies adjacent to each other in the circumferential direction, and a recess formed on the other split body, and the split bodies adjacent to each other in the circumferential direction are fixed to each other when the projecting portion fits into the recess.

In this case, since the fixing portion is configured such that the projecting portion fits into the recess, the fixing portion can reliably fix the split bodies adjacent to each other in the circumferential direction, to each other.

(10) According to another aspect, the construction method for the pipe joint structure of the present invention is a construction method for connecting, to the pipe joint structure of (2) above for connecting a pipe to a flow passage formed in a fluid device, the pipe, the construction method including, in the order stated: a step of placing the one axial side of each of the plurality of split bodies on a radially outer side of an outer circumferential surface of the pipe and combining the plurality of split bodies in the circumferential direction to fit the outer circumferential surface of the pipe onto the first inner circumferential surface portion of the outer joint pipe; and a step of relatively inserting the inner joint pipe into an inner circumferential side of the outer joint pipe from the other axial side of the outer joint pipe, fitting the first outer circumferential surface portion of the inner joint pipe onto an inner circumferential surface of the pipe, and fitting the second outer circumferential surface portion of the inner joint pipe onto the second inner circumferential surface portion of the outer joint pipe.

According to the construction method for the pipe joint structure of the present invention, the same advantageous effects as those of the pipe joint structure of (2) above are achieved.

### ADVANTAGEOUS EFFECTS OF THE INVENTION

According to the present invention, the pipe can be easily connected to the pipe joint structure without using a tool.

### BRIEF DESCRIPTION OF THE DRAWINGS

FIG. 1 is a perspective view showing a pipe joint structure according to a first embodiment.
FIG. 2 is a view taken in the direction of an arrow A in FIG. 1.
FIG. 3 is a cross-sectional view taken along a line B-O-C in FIG. 2.
FIG. 4 is a perspective view of an outer joint pipe as seen from one axial side.
FIG. 5 is a perspective view of the outer joint pipe as seen from another axial side.
FIG. 6 is a perspective view showing an inner joint pipe.
FIG. 7 is a cross-sectional perspective view showing a first restricting portion.
FIG. 8 is a perspective view showing a large groove portion of a hook groove of a second restricting portion.
FIG. 9 illustrates a construction method for the pipe joint structure in FIG. 1.
FIG. 10 illustrates the construction method for the pipe joint structure in FIG. 1.
FIG. 11 illustrates the construction method for the pipe joint structure in FIG. 1.
FIG. 12 illustrates the construction method for the pipe joint structure in FIG. 1.
FIG. 13 illustrates the construction method for the pipe joint structure in FIG. 1.
[FIG. 14 illustrates the construction method for the pipe joint structure in FIG. 1.
FIG. 15 is a perspective view showing a pipe joint structure according to a second embodiment.
FIG. 16 is a view of an outer joint pipe of the second embodiment as seen from another axial side.
FIG. 17 illustrates a state where each guided portion of a locking bar has slid along a guide surface from the state shown in FIG. 16.
FIG. 18 illustrates a construction method for the pipe joint structure in FIG. 15.
FIG. 19 illustrates the construction method for the pipe joint structure in FIG. 15.
FIG. 20 illustrates the construction method for the pipe joint structure in FIG. 15.
FIG. 21 illustrates the construction method for the pipe joint structure in FIG. 15.
FIG. 22 is a perspective view showing a pipe joint structure according to a third embodiment.
FIG. 23 is a view of an outer joint pipe of the third embodiment as seen from another axial side.
FIG. 24 is a view of the outer joint pipe of the third embodiment as seen from the lower side of FIG. 23.
FIG. 25 is a perspective view showing a locking bar of the third embodiment.
FIG. 26 illustrates a state where the locking bar has moved downward from the state shown in FIG. 23.
FIG. 27 is a cross-sectional perspective view showing an inner joint pipe of the third embodiment.
FIG. 28 is a perspective view showing a pipe joint structure according to a fourth embodiment.
FIG. 29 is a perspective view showing a state where an outer joint pipe of the fourth embodiment is disassembled.
FIG. 30 illustrates a construction method for the pipe joint structure in FIG. 28.
FIG. 31 is a perspective view showing a pipe joint structure according to a fifth embodiment.
FIG. 32 is a perspective view showing a state where an outer joint pipe and a fixing portion of the fifth embodiment are disassembled.
FIG. 33 illustrates a construction method for the pipe joint structure in FIG. 31.
FIG. 34 is a cross-sectional perspective view showing a modification of the first restricting portion.
FIG. 35 is a cross-sectional perspective view showing another modification of the first restricting portion.

### DETAILED DESCRIPTION

Next, preferred embodiments of the present invention will be described with reference to the accompanying drawings.

### First Embodiment

### <Configuration of Pipe Joint Structure>

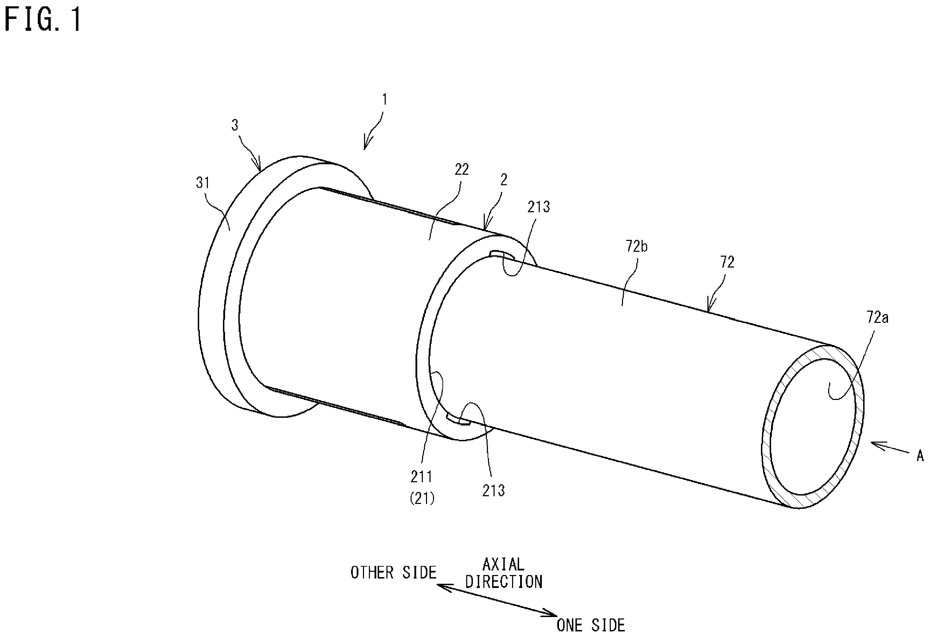

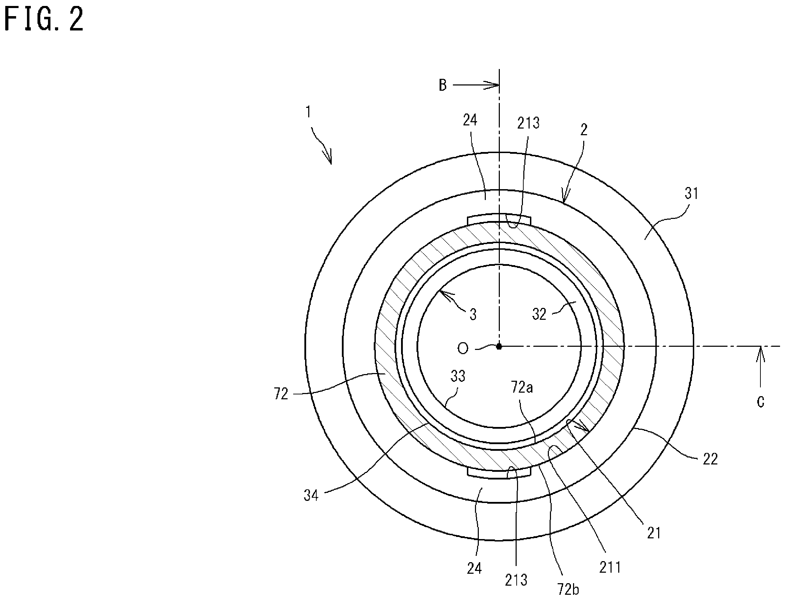

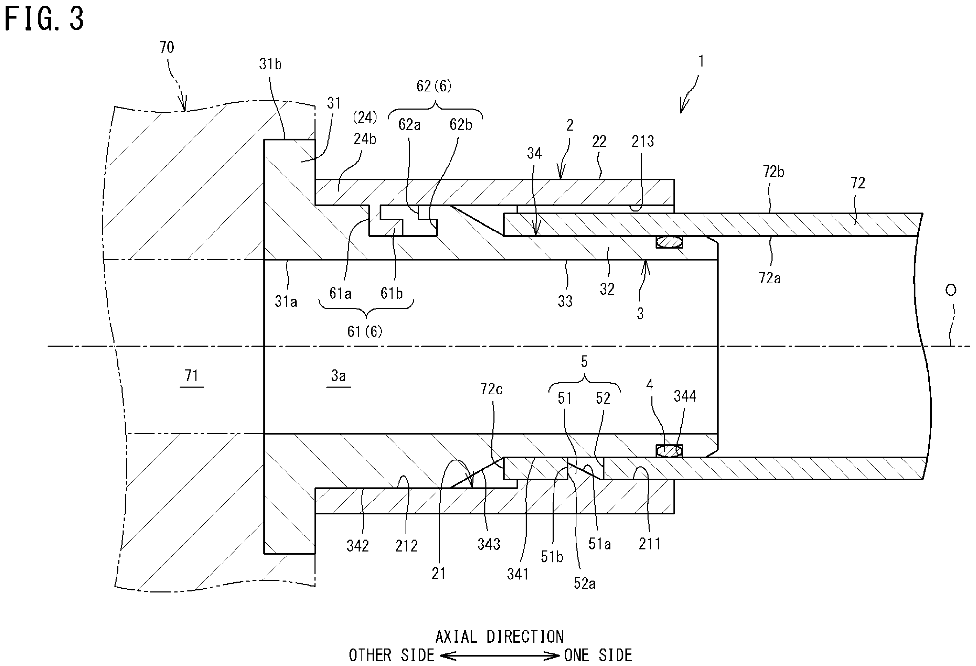

FIG. 1 is a perspective view showing a pipe joint structure 1 according to a first embodiment. FIG. 2 is a view taken in the direction of an arrow A in FIG. 1. FIG. 3 is a cross-sectional view taken along a line B-O-C in FIG. 2. In FIG. 1 to FIG. 3, the pipe joint structure 1 is used, for example, when connecting a deformable tube (pipe) 72 made of a synthetic resin, to a flow passage 71 of fluid equipment (fluid device) 70 through which a corrosive fluid (transport fluid) flows, in a hydrogen carrier production apparatus. The pipe joint structure 1 includes an outer joint pipe 2, an inner joint pipe 3, and a seal member 4.

Hereinafter, in the present invention, a direction along an axis O of the pipe joint structure 1 is the axial direction of the pipe joint structure 1 and is simply referred to as "axial direction". For convenience, the right side in FIG. 3 is referred to as "one axial side", and the left side in FIG. 3 is referred to as "other axial side". In addition, a direction orthogonal to the axis O is the radial direction of the pipe joint structure 1 and is simply referred to as "radial direction". The direction of rotation about the axis O is the circumferential direction of the pipe joint structure 1 and is simply referred to as "circumferential direction".

The outer joint pipe 2 is formed into a cylindrical shape from a synthetic resin material such as PVC, PP, PE, or a fluorine resin (PFA or PTFE). An outer circumferential surface 22 of the outer joint pipe 2 has a uniform diameter over the entirety thereof in the axial direction. An inner circumferential surface 21 of the outer joint pipe 2 has a first inner circumferential surface portion 211 formed on the one axial side, and a second inner circumferential surface portion 212 formed on the other axial side. The second inner circumferential surface portion 212 has a larger diameter than the first inner circumferential surface portion 211. An outer circumferential surface 72b of an end portion of the tube 72 is fitted onto the first inner circumferential surface portion 211 from the one axial side thereof.

A recess 213 is formed in the first inner circumferential surface portion 211. A pair of recesses 213 are formed at equal intervals (180° intervals) in the circumferential direction in the first inner circumferential surface portion 211 (see FIG. 2). Each recess 213 is formed over the overall length in the axial direction of the first inner circumferential surface portion 211. The bottom surface of each recess 213 is formed flush with the second inner circumferential surface portion 212.

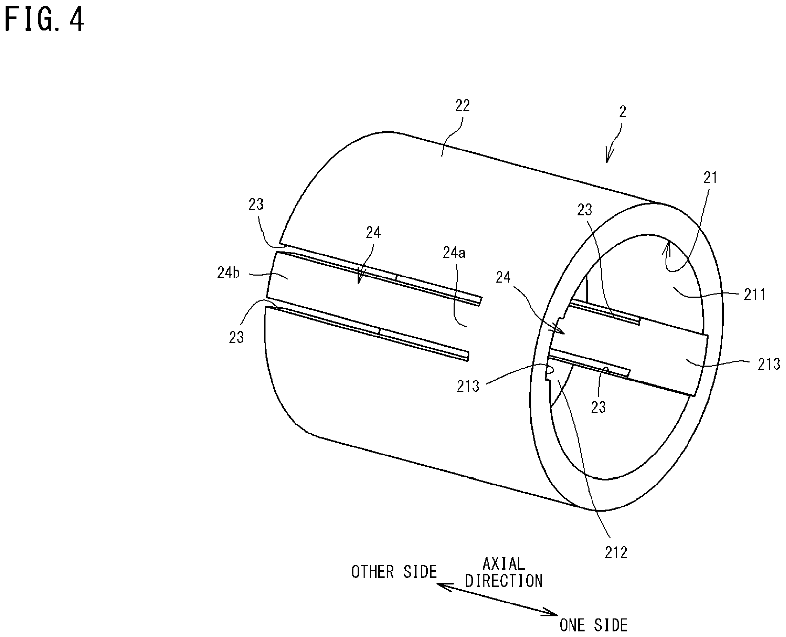

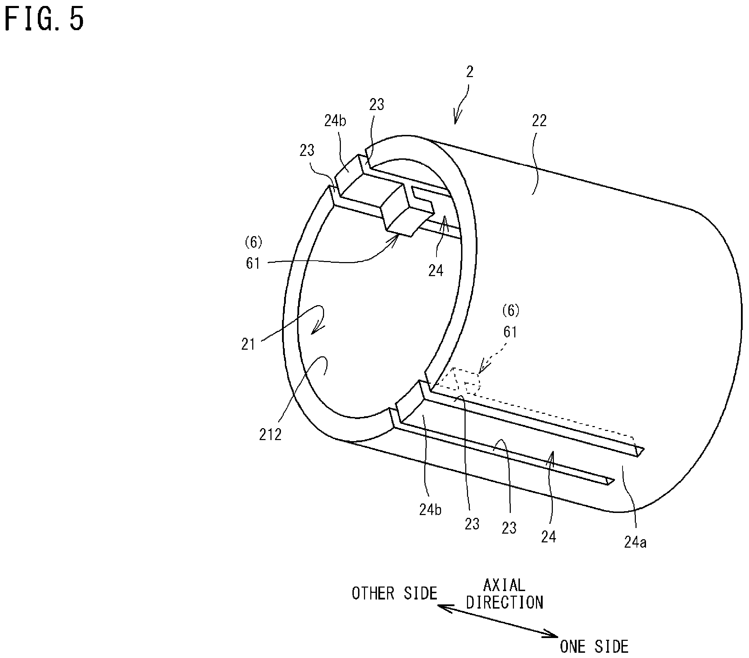

FIG. 4 is a perspective view of the outer joint pipe 2 as seen from the one axial side. FIG. 5 is a perspective view of the outer joint pipe 2 as seen from the other axial side. In FIG. 2 to FIG. 5, slits 23 are formed on both sides in the circumferential direction of each recess 213, respectively. Each slit 23 is cut from the end surface on the other axial side to an intermediate portion on the one axial side of the outer joint pipe 2 (an intermediate portion of the recess 213). The second inner circumferential surface portion 212 is divided in the circumferential direction by each slit 23.

The outer joint pipe 2 has a flexible piece 24 between each pair of slits 23 that are adjacent to each other in the circumferential direction. Each flexible piece 24 has a base end portion 24a on the one axial side and a distal end portion 24b on the other axial side. The distal end portion 24b is capable of bending and deforming in the radial direction with the base end portion 24a serving as a fulcrum.

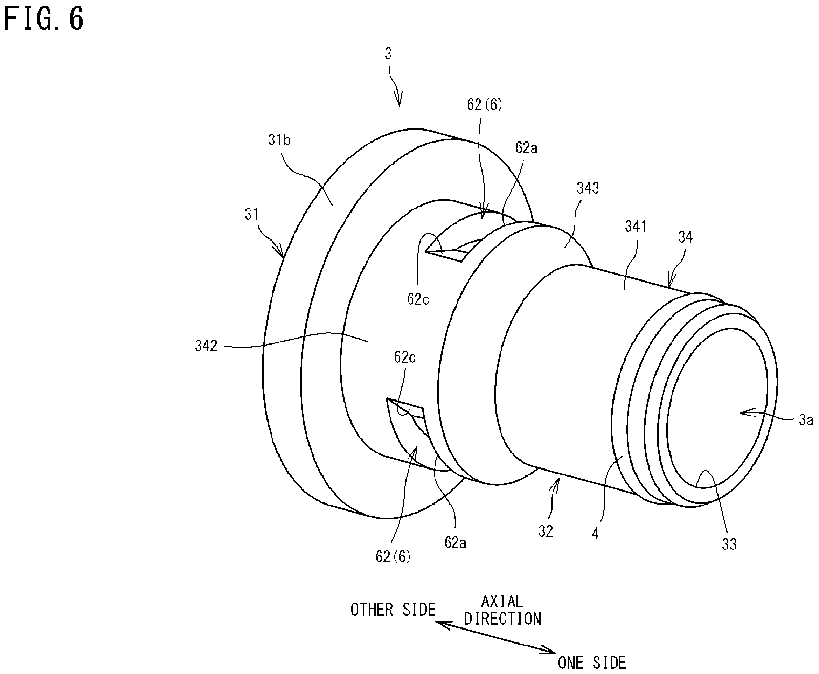

FIG. 6 is a perspective view showing the inner joint pipe 3. In FIG. 3 and FIG. 6, a communication passage 3a through which the transport fluid flows is formed in the inner joint pipe 3 so as to penetrate in the axial direction. In the present embodiment, since the transport fluid is a corrosive fluid, the inner joint pipe 3 is formed from a material having corrosion resistance (for example, a fluorine resin, titanium-palladium, or the like). The inner joint pipe 3 includes an annular portion 31 that is an end portion on the one axial side thereof, and a cylindrical portion 32 that extends from an inner circumferential end portion of the annular portion 31 toward the one axial side.

An outer circumferential surface 31b of the annular portion 31 has a larger diameter than the outer circumferential surface 22 of the outer joint pipe 2. The annular portion 31 is connected to the fluid equipment 70 such that the communication passage 3a communicates with the flow passage 71 of the fluid equipment 70. An inner circumferential surface 31a of the annular portion 31 has substantially the same diameter as the inner circumferential surface of the flow passage 71.

An inner circumferential surface 33 of the cylindrical portion 32 has a uniform diameter over the entirety thereof in the axial direction and has the same diameter as the inner circumferential surface 31a of the annular portion 31. An outer circumferential surface 34 of the cylindrical portion 32 has a first outer circumferential surface portion 341 formed on the one axial side, and a second outer circumferential surface portion 342 formed on the other axial side. The second outer circumferential surface portion 342 has a larger diameter than the first outer circumferential surface portion 341. The first outer circumferential surface portion 341 is fitted onto an inner circumferential surface 72a of the end portion of the tube 72 from the one axial side thereof. The second outer circumferential surface portion 342 is fitted onto the second inner circumferential surface portion 212 of the outer joint pipe 2 from the other axial side thereof.

The inner circumferential surface 33 of the cylindrical portion 32 further has an annular tapered surface 343 formed between the first outer circumferential surface portion 341 and the second outer circumferential surface portion 342. The tapered surface 343 is inclined such that the diameter thereof gradually increases from one axial end toward the other axial end thereof.

The seal member 4 is an annular member that suppresses leakage of the transport fluid from between the first outer circumferential surface portion 341 of the inner joint pipe 3 and the inner circumferential surface 72a of the end portion of the tube 72. The seal member 4 is formed from a material having corrosion resistance, similar to the inner joint pipe 3. The seal member 4 of the present embodiment is, for example, an O-ring.

The seal member 4 is provided on the first outer circumferential surface portion 341 of the inner joint pipe 3. Specifically, an annular recessed groove 344 is formed at an end portion on the one axial side of the first outer circumferential surface portion 341, and the seal member 4 is fitted and fixed into the recessed groove 344. When the first outer circumferential surface portion 341 of the inner joint pipe 3 is fitted onto the inner circumferential surface 72a of the end portion of the tube 72 as described above, the outer circumferential surface of the seal member 4 comes into close contact with the inner circumferential surface 72a of the end portion of the tube 72. Accordingly, the seal member 4 seals between the first outer circumferential surface portion 341 of the inner joint pipe 3 and the inner circumferential surface 72a of the end portion of the tube 72.

The tube 72 may attempt to expand radially outward from the state shown in FIG. 3 due to the fluid pressure or thermal expansion of the transport fluid. In such a case, since the outer circumferential surface 72b of the tube 72 is fitted onto the first inner circumferential surface portion 211 of the outer joint pipe 2, radial expansion of the tube 72 can be restricted by the outer joint pipe 2. Accordingly, the formation of a gap between the inner joint pipe 3 (cylindrical portion 32) and the tube 72 can be suppressed. As a result, it is possible to inhibit a portion of the seal member 4 in the recessed groove 344 from protruding into such a gap, or to inhibit a compression margin in the radial direction of the seal member 4 from decreasing, and thus it is possible to effectively inhibit the sealing performance of the seal member 4 from decreasing.

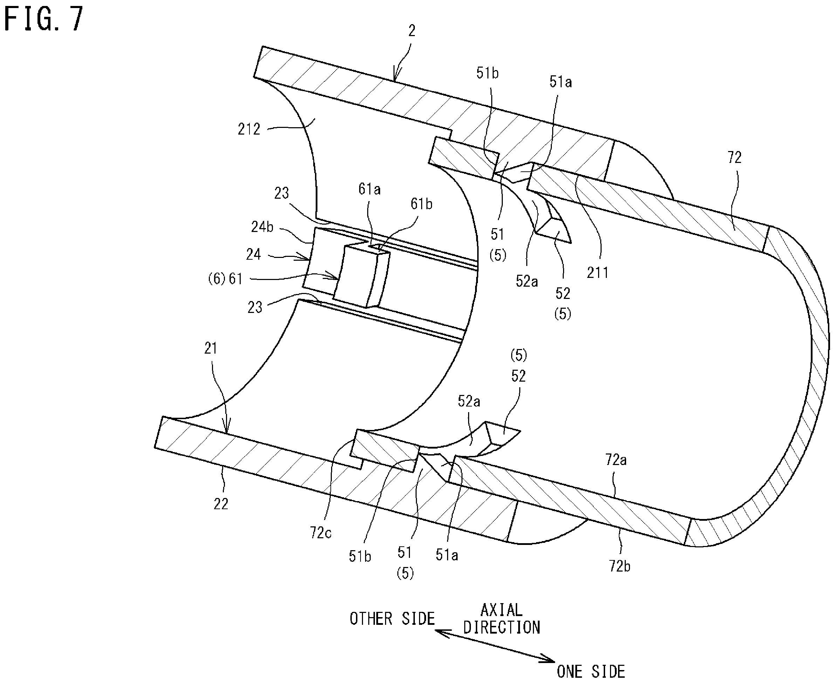

The pipe joint structure 1 further includes a first restricting portion 5. FIG. 7 is a cross-sectional perspective view showing the first restricting portion 5. In FIG. 3 and FIG. 7, the first restricting portion 5 has a pair of engagement projections 51 and a pair of engagement grooves 52. The pair of engagement projections 51 are integrally provided on the first inner circumferential surface portion 211 of the outer joint pipe 2. The pair of engagement grooves 52 are provided on the outer circumferential surface 72b of the end portion of the tube 72. In the state shown in FIG. 3, the pair of engagement grooves 52 are located on the other axial side with respect to the seal member 4.

The pair of engagement projections 51 are provided at equal intervals (180° intervals) in the circumferential direction on the first inner circumferential surface portion 211. Each engagement projection 51 is located between the pair of flexible pieces 24 in the circumferential direction. Each engagement projection 51 of the present embodiment is located at an intermediate location between the pair of flexible pieces 24. Each engagement projection 51 protrudes radially inward from the first inner circumferential surface portion 211. Each engagement projection 51 is formed, for example, in a triangular shape in a cross-sectional view. Each engagement projection 51 has a tapered surface 51a and an engagement surface 51b.

The tapered surface 51a is inclined such that the length by which the engagement projection 51 protrudes radially inward gradually increases from one axial end toward the other axial end thereof. The engagement surface 51b is a step surface formed between the other axial end of the tapered surface 51a and the first inner circumferential surface portion 211 and is formed perpendicular to the first inner circumferential surface portion 211.

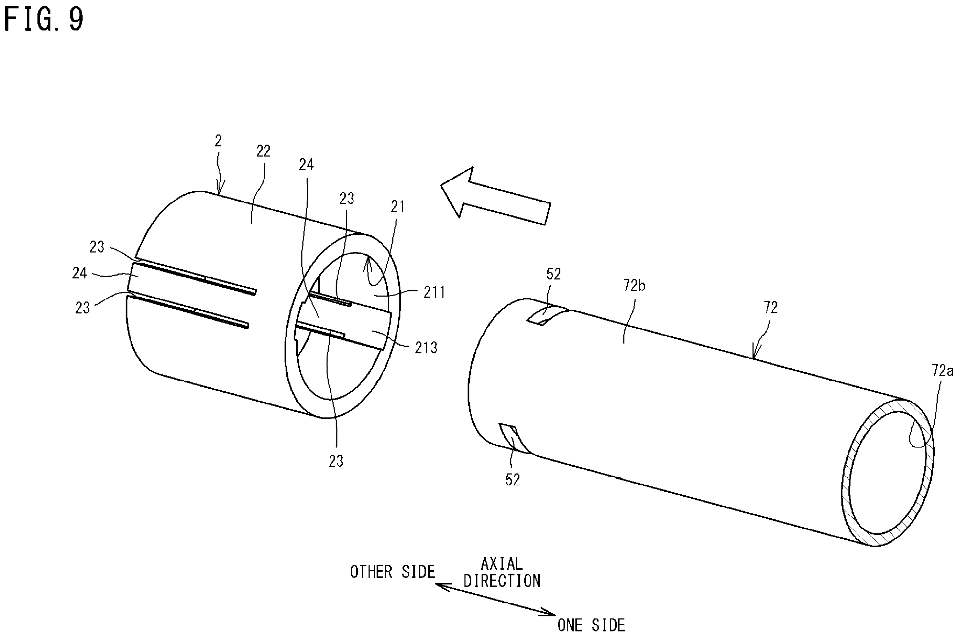

The pair of engagement grooves 52 are formed at equal intervals (180° intervals) in the circumferential direction on the outer circumferential surface 72b of the end portion of the tube 72 (see also FIG. 9). The engagement projection 51 is fitted into and engaged with each engagement groove 52. Therefore, each engagement groove 52 is formed with a size that allows the entire engagement projection 51 to be fitted thereinto. Each engagement groove 52 of the present embodiment is an elongated hole that is formed so as to penetrate the tube 72 in the thickness direction thereof and is long in the circumferential direction. The circumferential length of each engagement groove 52 is larger than the circumferential length of the engagement projection 51. The side surface on the other axial side of each engagement groove 52 is an engaged surface 52a with which the engagement surface 51b of the engagement projection 51 engages.

In a state where the outer circumferential surface 72b of the end portion of the tube 72 is fitted onto the first inner circumferential surface portion 211 of the outer joint pipe 2, the engagement projection 51 is fitted into each engagement groove 52, and the engagement surface 51b of the engagement projection 51 is engaged with the engaged surface 52a of the engagement groove 52. By this engagement, the relative movement of the tube 72 with respect to the first inner circumferential surface portion 211 of the outer joint pipe 2 toward the one axial side is restricted. Therefore, when the outer circumferential surface 72b of the end portion of the tube 72 is fitted onto the first inner circumferential surface portion 211 of the outer joint pipe 2, the first restricting portion 5 can inhibit the tube 72 from being pulled out relative to the first inner circumferential surface portion 211 of the outer joint pipe 2 toward the one axial side.

In FIG. 3, FIG. 5, and FIG. 6, the pipe joint structure 1 further includes a second restricting portion 6. The second restricting portion 6 has a pair of hook portions 61 and a pair of hook grooves 62. The pair of hook portions 61 are integrally provided on the second inner circumferential surface portion 212 of the outer joint pipe 2. The pair of hook grooves 62 are provided on the second outer circumferential surface portion 342 of the inner joint pipe 3.

The pair of hook portions 61 are provided at equal intervals (180° intervals) in the circumferential direction on the second inner circumferential surface portion 212. In the present embodiment, each hook portion 61 is provided on the inner circumferential surface on the distal end portion 24b side (the second inner circumferential surface portion 212) of the flexible piece 24. By the distal end portion 24b of the flexible piece 24 bending and deforming in the radial direction, the hook portion 61 can be displaced in the radial direction with respect to the outer joint pipe 2.

The hook portion 61 is formed in a hook-like shape. The hook portion 61 has a first plate portion 61a that protrudes radially inward from the second inner circumferential surface portion 212, and a second plate portion 61b that extends from the protruding end of the first plate portion 61a toward the one axial side.

The pair of hook grooves 62 are formed at equal intervals (180° intervals) in the circumferential direction on the second outer circumferential surface portion 342 of the inner joint pipe 3. Each hook groove 62 has a large groove portion 62a and a small groove portion 62b that communicates with the large groove portion 62a. The large groove portion 62a is cut from the second outer circumferential surface portion 342 toward the radially inner side of the inner joint pipe 3. The large groove portion 62a is formed with a size that allows the entire hook portion 61 to be fitted thereinto. The large groove portion 62a of the present embodiment is, for example, a recessed groove that is long in the circumferential direction. The circumferential length of the large groove portion 62a is larger than the circumferential length of the hook portion 61. The axial length of the large groove portion 62a is larger than the axial length of the hook portion 61.

The small groove portion 62b is cut from the bottom side of the side surface on the one axial side of the large groove portion 62a toward the one axial side. The small groove portion 62b is formed with a size that allows the second plate portion 61b of the hook portion 61 to be fitted thereinto. The circumferential length of the small groove portion 62b is the same as the circumferential length of the large groove portion 62a. When the second plate portion 61b of the hook portion 61 is fitted into the small groove portion 62b, the hook portion 61 is caught in the hook groove 62.

As shown in FIG. 3, in a state where the second outer circumferential surface portion 342 of the inner joint pipe 3 is fitted onto the second inner circumferential surface portion 212 of the outer joint pipe 2, each hook portion 61 of the second restricting portion 6 is fitted into the large groove portion 62a of the hook groove 62. From this state, when the inner joint pipe 3 relatively moves with respect to the outer joint pipe 2 toward the other axial side, the second plate portion 61b of the hook portion 61 is caught in the small groove portion 62b.

Accordingly, the relative movement of the inner joint pipe 3 with respect to the second inner circumferential surface portion 212 of the outer joint pipe 2 toward the other axial side is restricted. Therefore, when the second outer circumferential surface portion 342 of the inner joint pipe 3 is fitted onto the second inner circumferential surface portion 212 of the outer joint pipe 2, the second restricting portion 6 can inhibit the inner joint pipe 3 from being pulled out relative to the second inner circumferential surface portion 212 of the outer joint pipe 2 toward the other axial side.

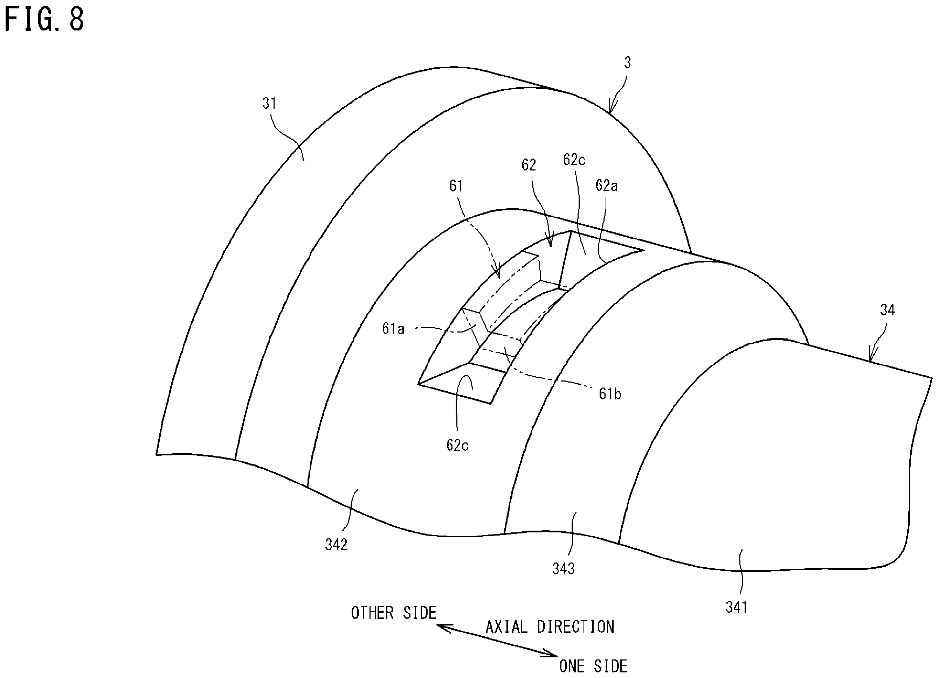

FIG. 8 is a perspective view showing the large groove portion 62a of the hook groove 62 of the second restricting portion 6. In FIG. 3 and FIG. 8, tapered surfaces 62c are formed on both sides in the circumferential direction of each large groove portion 62a, respectively (see also FIG. 6). The tapered surfaces 62c are inclined such that the groove depths thereof gradually increase from the respective opening ends on both sides in the circumferential direction toward the bottom surface of the large groove portion 62a.

From the state shown in FIG. 3, when a worker rotates the outer joint pipe 2 relative to the inner joint pipe 3 toward one side in the circumferential direction or the other side in the circumferential direction, the second plate portion 61b of the hook portion 61 comes into contact with the tapered surface 62c of the large groove portion 62a. When the worker further rotates the outer joint pipe 2 from this state, the hook portion 61 moves to the second outer circumferential surface portion 342 along the tapered surface 62c while being displaced radially outward relative to the outer joint pipe 2. Accordingly, the hook portion 61 is pulled out from the hook groove 62. When the worker relatively moves the outer joint pipe 2 with respect to the inner joint pipe 3 toward the other axial side from this state, the outer joint pipe 2 can be relatively separated from the inner joint pipe 3.

### <Construction Method for Pipe Joint Structure>

Next, a construction method in which the tube 72 is connected to the pipe joint structure 1 of the present embodiment, will be described. FIG. 9 to FIG. 14 illustrate the construction method. First, as shown in FIG. 9, the worker relatively inserts the end portion of the tube 72 into the inner circumferential side of the outer joint pipe 2 from the one axial side of the outer joint pipe 2. As a result, the end portion of the tube 72 relatively moves toward the other axial side while a portion of the outer circumferential surface 72b thereof is fitted onto the first inner circumferential surface portion 211 of the outer joint pipe 2.

Here, the phrase "relatively inserting" one pipe to another pipe refers to any of the following cases (the same applies hereinafter).

D: A case where the one pipe is inserted into the other pipe by moving the other pipe while the one pipe is stationary.

E: A case where the one pipe is inserted into the other pipe by moving the one pipe while the other pipe is stationary.

F: A case where the one pipe is inserted into the other pipe by moving both the one pipe and the other pipe.

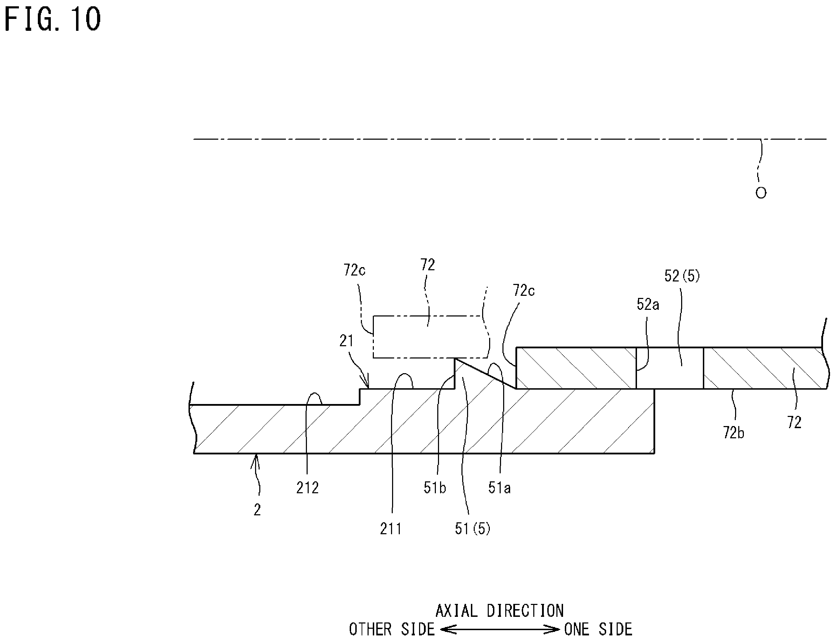

When the end portion of the tube 72 relatively moves toward the other axial side within the outer joint pipe 2, an end surface 72c of the tube 72 comes into contact with the tapered surface 51a of each engagement projection 51 on the outer joint pipe 2 side as indicated by a solid line in FIG. 10. From this state, when the worker relatively pushes the tube 72 relative to the outer joint pipe 2 toward the other axial side, the end portion of the tube 72 becomes elastically deformed radially inward, whereby the end surface 72c of the tube 72 relatively moves toward the other axial side along the tapered surface 51a and passes over the engagement projection 51 as indicated by an alternate long and two short dashes line in FIG. 10.

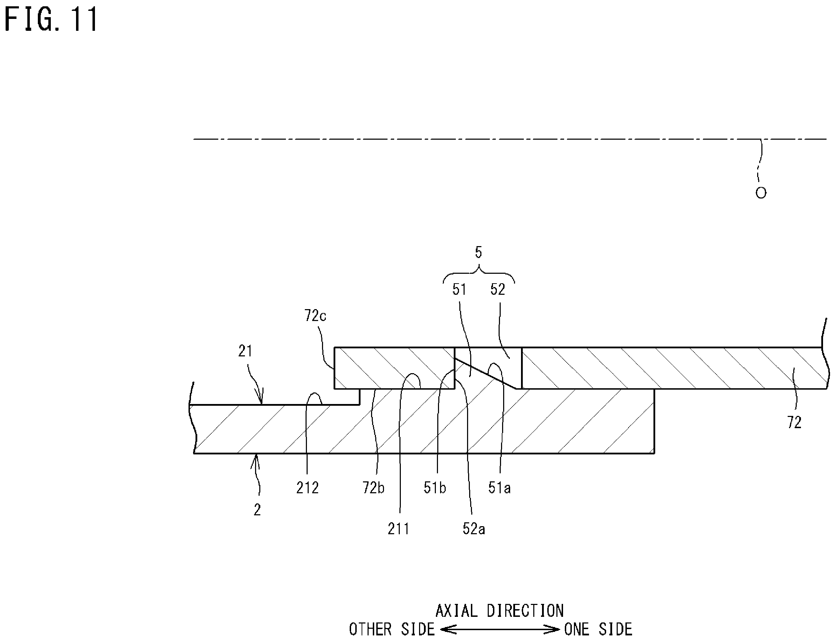

From this state, when the worker further relatively pushes the tube 72 toward the other axial side, as shown in FIG. 11, the engagement projection 51 fits into the engagement groove 52 of the first restricting portion 5, and the outer circumferential surface 72b of the end portion of the tube 72 becomes fitted onto the entire first inner circumferential surface portion 211 of the outer joint pipe 2. When the engagement projection 51 is fitted into the engagement groove 52, the engagement surface 51b of the engagement projection 51 engages with the engaged surface 52a of the engagement groove 52.

By this engagement, the first restricting portion 5 restricts the relative movement of the tube 72 with respect to the first inner circumferential surface portion 211 of the outer joint pipe 2 toward the one axial side. Accordingly, the first restricting portion 5 can inhibit the tube 72 from being pulled out relative to the first inner circumferential surface portion 211 of the outer joint pipe 2 toward the one axial side.

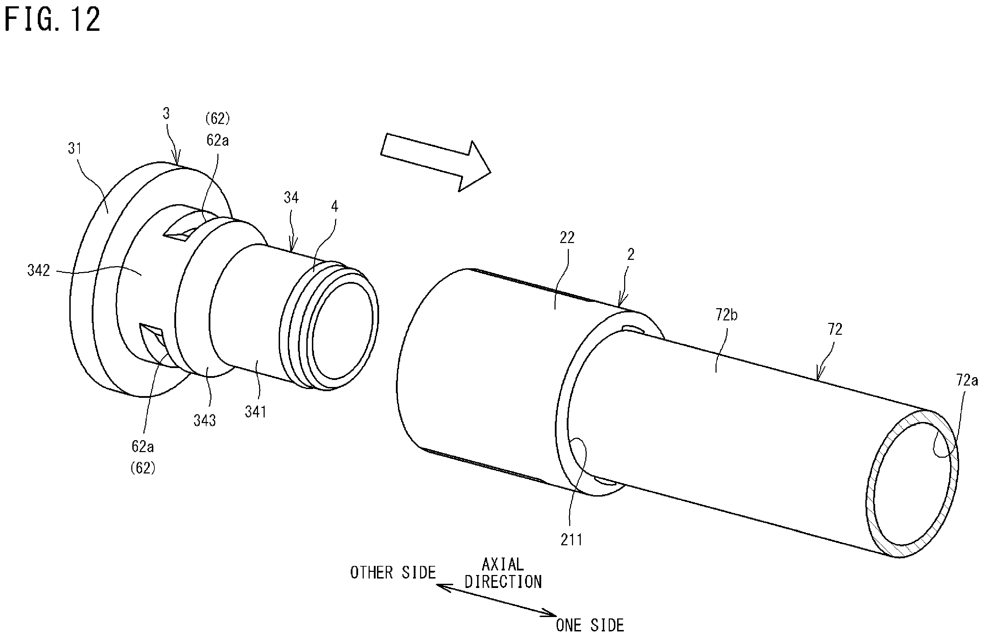

Next, as shown in FIG. 12, the worker relatively inserts the inner joint pipe 3 into the inner circumferential side of the outer joint pipe 2 from the other axial side of the outer joint pipe 2. At this time, the worker inserts the inner joint pipe 3 from an end portion on the one axial side of the inner joint pipe 3 into the inner circumferential side of the outer joint pipe 2. Accordingly, the first outer circumferential surface portion 341, the tapered surface 343, and the second outer circumferential surface portion 342 of the inner joint pipe 3 are relatively inserted into the inner circumferential side of the outer joint pipe 2 in this order.

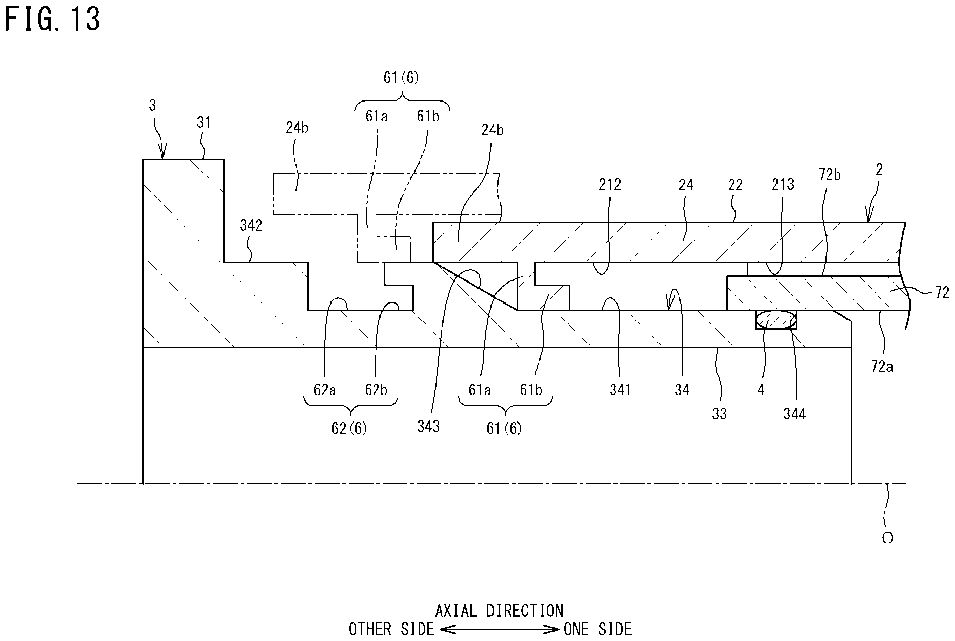

The inner joint pipe 3 that has been relatively inserted into the inner circumferential side of the outer joint pipe 2 is further relatively inserted into the inner circumferential side of the end portion of the tube 72 that has been fitted onto the first inner circumferential surface portion 211 of the outer joint pipe 2. As a result, the inner joint pipe 3 relatively moves toward the other axial side while a portion of the first outer circumferential surface portion 341 thereof is fitted onto the inner circumferential surface 72a of the end portion of the tube 72. During this movement, the seal member 4 on the inner joint pipe 3 side comes into close contact with the inner circumferential surface 72a of the end portion of the tube 72 (see FIG. 13). Accordingly, the seal member 4 seals between the first outer circumferential surface portion 341 of the inner joint pipe 3 and the inner circumferential surface 72a of the end portion of the tube 72.

When the inner joint pipe 3 moves further relatively toward the other axial side within the tube 72, each hook portion 61 on the outer joint pipe 2 side comes into contact with the tapered surface 343 of the inner joint pipe 3 as indicated by a solid line in FIG. 13. From this state, when the worker relatively pushes the inner joint pipe 3 with respect to the outer joint pipe 2 toward the one axial side, the hook portion 61 that is in contact with the tapered surface 343 pushes the distal end portion 24b of the flexible piece 24 of the outer joint pipe 2 radially outward. This pressing force causes the distal end portion 24b of the flexible piece 24 to bend and deform radially outward, whereby the hook portion 61 relatively moves from the one axial side toward the other axial side along the tapered surface 343 while being displaced radially outward. Accordingly, as indicated by an alternate long and two short dashes line in FIG. 13, the second plate portion 61b of the hook portion 61 rides onto the second outer circumferential surface portion 342 of the inner joint pipe 3.

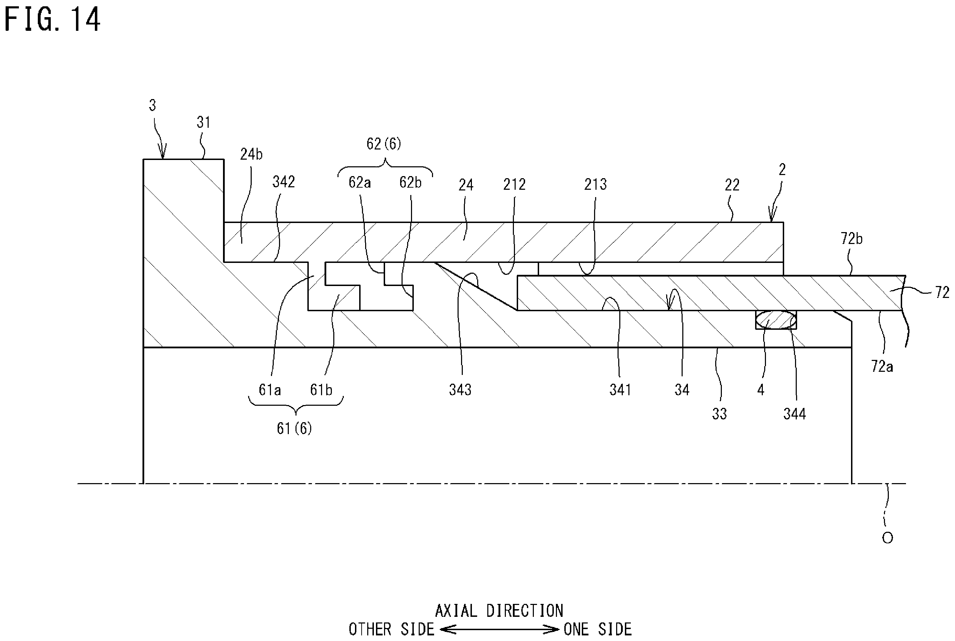

From this state, when the worker further relatively pushes the inner joint pipe 3 toward the one axial side, the hook portion 61 fits into the hook groove 62 of the second restricting portion 6 as shown in FIG. 14. Accordingly, the entire second outer circumferential surface portion 342 of the inner joint pipe 3 becomes fitted onto the second inner circumferential surface portion 212 of the outer joint pipe 2, and the entire first outer circumferential surface portion 341 of the inner joint pipe 3 becomes fitted onto the inner circumferential surface 72a of the end portion of the tube 72.

When each hook portion 61 fits into the hook groove 62, the second restricting portion 6 restricts the relative movement of the inner joint pipe 3 with respect to the second inner circumferential surface portion 212 of the outer joint pipe 2 toward the other axial side as described above. Accordingly, the second restricting portion 6 can inhibit the inner joint pipe 3 from being pulled out relative to the second inner circumferential surface portion 212 of the outer joint pipe 2 toward the other axial side.

### <Advantageous Effects>

According to the pipe joint structure 1 of the first embodiment, by relatively inserting the tube 72 into the inner circumferential side of the outer joint pipe 2 from the one axial side, the outer circumferential surface 72b of the tube 72 is fitted onto the first inner circumferential surface portion 211 of the outer joint pipe 2. Accordingly, the first restricting portion 5 can restrict the relative movement of the tube 72 with respect to the first inner circumferential surface portion 211 of the outer joint pipe 2 toward the one axial side. In this state, by relatively inserting the inner joint pipe 3 into the inner circumferential side of the outer joint pipe 2 from the other axial side, the first outer circumferential surface portion 341 of the inner joint pipe 3 is fitted onto the inner circumferential surface 72a of the tube 72, and the second outer circumferential surface portion 342 of the inner joint pipe 3 is fitted onto the second inner circumferential surface portion 212 of the outer joint pipe 2. Accordingly, the seal member 4 seals between the first outer circumferential surface portion 341 of the inner joint pipe 3 and the inner circumferential surface 72a of the tube 72, and the second restricting portion 6 can restrict the relative movement of the inner joint pipe 3 with respect to the second inner circumferential surface portion 212 of the outer joint pipe 2 toward the other axial side. Therefore, the worker can easily connect the tube 72 to the pipe joint structure 1 without using a tool, simply by relatively inserting the tube 72 into the inner circumferential side of the outer joint pipe 2 from the one axial side, and then relatively inserting the inner joint pipe 3 into the inner circumferential side of the outer joint pipe 2 from the other axial side.

Since the first restricting portion 5 is configured such that each engagement projection 51 on the outer joint pipe 2 side engages with the engagement groove 52 on the tube 72 side, the first restricting portion 5 can reliably restrict the relative movement of the tube 72 with respect to the outer joint pipe 2.

Each engagement groove 52 of the first restricting portion 5 is located on the other axial side with respect to the seal member 4 which seals between the tube 72 and the outer joint pipe 2. Therefore, the seal member 4 can inhibit the transport fluid within the tube 72 from leaking from the engagement groove 52 toward the one axial side of the outer joint pipe 2. Accordingly, it is not necessary to additionally provide a seal structure between the tube 72 and the outer joint pipe 2, and thus the configuration of the pipe joint structure 1 can be simplified.

Since the second restricting portion 6 is configured such that each hook portion 61 on the outer joint pipe 2 side is caught in the hook groove 62 on the inner joint pipe 3 side, the second restricting portion 6 can reliably restrict the relative movement of the inner joint pipe 3 with respect to the outer joint pipe 2. In addition, since each hook portion 61 is integrally provided to the outer joint pipe 2, the configuration of the pipe joint structure 1 can be simplified.

Since the outer joint pipe 2 does not come into contact with the corrosive fluid which is the transport fluid, the outer joint pipe 2 can be formed from a material that is less expensive than a material having corrosion resistance. Accordingly, the manufacturing cost of the pipe joint structure 1 can be reduced.

### Second Embodiment

### <Configuration of Pipe Joint Structure>

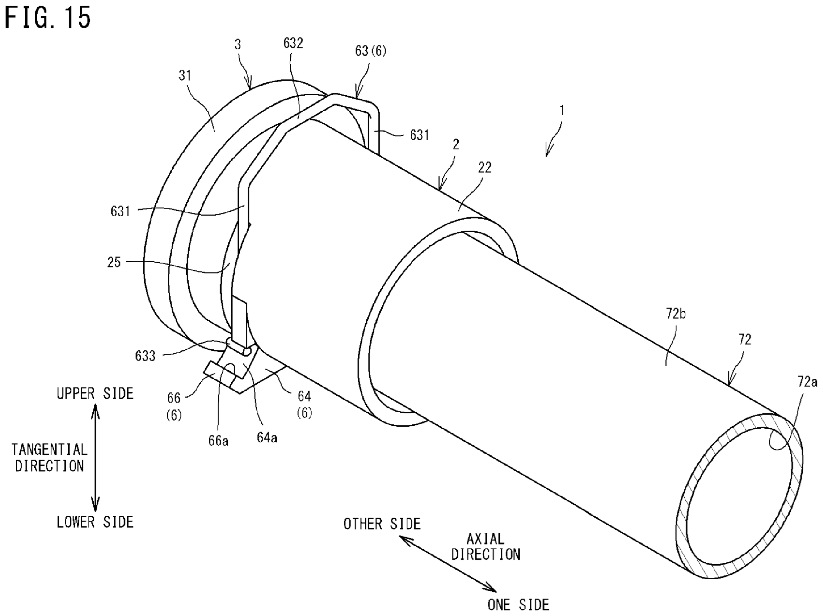

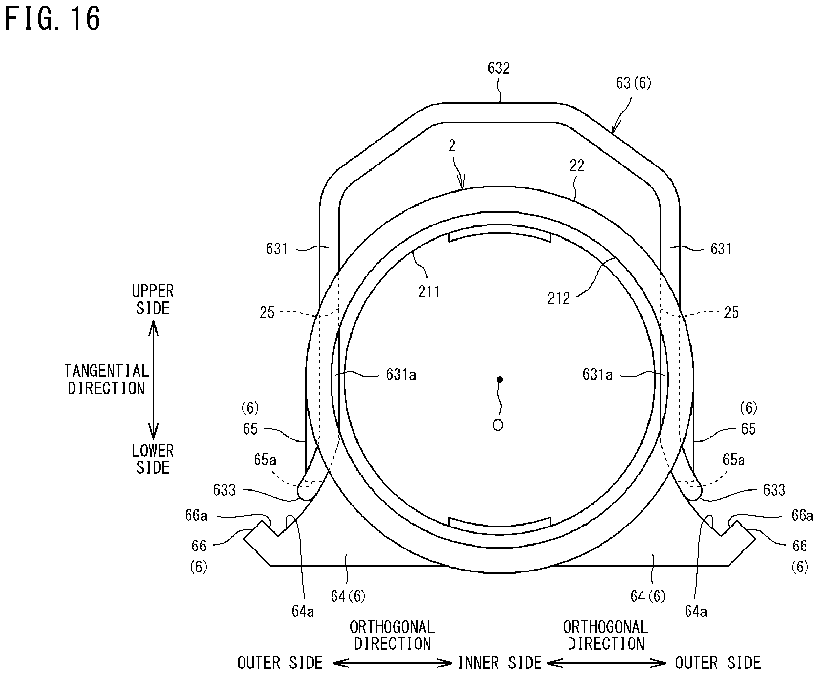

FIG. 15 is a perspective view showing a pipe joint structure 1 according to a second embodiment. FIG. 16 is a view of an outer joint pipe 2 of the pipe joint structure 1 as seen from the other axial side. In the present embodiment, the respective configurations of the outer joint pipe 2 and a second restricting portion 6 are different from those of the first embodiment. In FIG. 15 and FIG. 16, the outer joint pipe 2 of the present embodiment is a cylindrical member having no slit. A pair of through holes 25 are formed at an end portion on the other axial side of the outer joint pipe 2.

The pair of through holes 25 are formed at equal intervals (180° intervals) in the circumferential direction in the outer joint pipe 2. Each through hole 25 is an elongated hole that is formed so as to penetrate the outer joint pipe 2 in the thickness direction thereof and is long in the circumferential direction. The radially inner end of each through hole 25 is open on the second inner circumferential surface portion 212 of the outer joint pipe 2.

The second restricting portion 6 has a locking bar 63, a pair of guides 64, a pair of first stoppers 65, and a pair of second stoppers 66. The locking bar 63 is provided on the outer joint pipe 2 as a component separate from the outer joint pipe 2. The locking bar 63 is, for example, a rod-shaped component made of the same synthetic resin material as the outer joint pipe 2. The locking bar 63 of the present embodiment is formed so as to bend in an approximately U-shape, for example. The locking bar 63 has a pair of locking portions 631, an operation portion 632, and a pair of guided portions 633.

The pair of locking portions 631 extend in a tangential direction on both sides in the radial direction of the outer joint pipe 2, respectively, and are arranged parallel to each other. In the present embodiment, the up-down direction in FIG. 16 corresponds to the tangential direction of the outer joint pipe 2 in which the locking portions 631 extend. A portion 631a of each locking portion 631 in its longitudinal direction is inserted along the longitudinal direction of each through hole 25 of the outer joint pipe 2 and protrudes (is exposed) radially inward from the second inner circumferential surface portion 212 of the outer joint pipe 2.

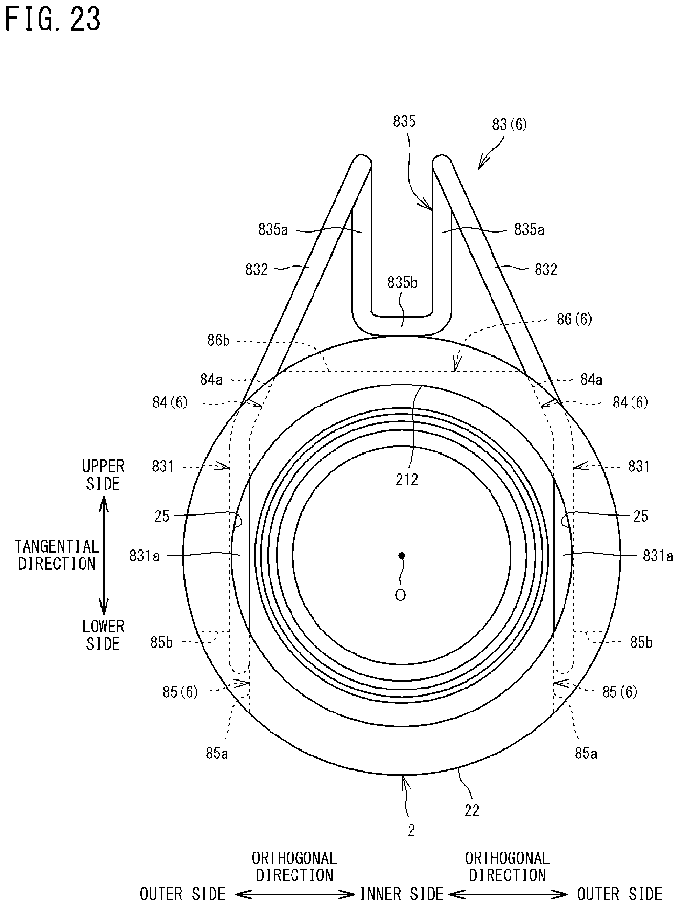

Hereinafter, in the present invention, the up-down direction in FIG. 16 is simply referred to as "tangential direction". For convenience, the upper side in FIG. 16 is referred to as "tangential upper side", and the lower side in FIG. 16 is referred to as "tangential lower side". In addition, the left-right direction in FIG. 16 is a direction orthogonal to the "tangential direction" and is simply referred to as "orthogonal direction". For convenience, each of directions from the center portion (axis O) of the outer joint pipe 2 to both sides in the orthogonal direction is referred to as "orthogonal outer side", and each of directions from both sides in the orthogonal direction of the outer joint pipe 2 toward the center portion of the outer joint pipe 2 is referred to as "orthogonal inner side" (the same applies to FIG. 23).

The operation portion 632 of the locking bar 63 couples end portions on the tangential upper side of the pair of locking portions 631. The operation portion 632 is a portion to be operated by fingers of the worker. The operation portion 632 is located on the tangential upper side, away from the outer circumferential surface 22 of the outer joint pipe 2. The pair of guided portions 633 of the locking bar 63 bend from end portions on the tangential lower side of the respective locking portions 631 and extend toward the one axial side. Each guided portion 633 is located on the orthogonal outer side with respect to the outer circumferential surface 22 of the outer joint pipe 2.

The pair of guides 64 guide the respective guided portions 633 of the locking bar 63. Each guide 64 is fixed on the outer circumferential surface 22 of the outer joint pipe 2, adjacent to the tangential lower side of the through hole 25. Each guide 64 of the present embodiment is integrally provided on the outer circumferential surface 22 of the outer joint pipe 2 and protrudes from the outer circumferential surface 22 toward the orthogonal outer side. Each guide 64 has a guide surface 64a formed on the tangential upper side thereof.

The guide surface 64a is composed of a concave curved surface inclined from the orthogonal inner side and the tangential upper side toward the orthogonal outer side and the tangential lower side. The guided portion 633 of the locking bar 63 is in contact with the guide surface 64a of each guide 64. The guided portion 633 is configured to slide along the guide surface 64a.

The pair of first stoppers 65 are fixed on the outer circumferential surface 22 of the outer joint pipe 2, adjacent to the tangential upper side of the respective guides 64. Each first stopper 65 of the present embodiment is integrally provided on the outer circumferential surface 22 of the outer joint pipe 2. Each first stopper 65 has a stopper surface 65a formed on the tangential lower side thereof. The stopper surface 65a is configured such that the guided portion 633 of the locking bar 63 comes into contact with the stopper surface 65a. In the state shown in FIG. 15 and FIG. 16, each guided portion 633 of the locking bar 63 is located on the tangential upper side of the guide surface 64a of each guide 64 and is in contact with the stopper surface 65a of each first stopper 65.

The pair of second stoppers 66 are fixed on the orthogonal outer side of the respective guides 64. Each second stopper 66 of the present embodiment is integrally provided on the guide 64. Each second stopper 66 protrudes toward the tangential upper side and the orthogonal outer side with respect to the guide surface 64a. Each second stopper 66 has a stopper surface 66a formed on the guide surface 64a side. When the guided portion 633 of the locking bar 63 slides along the guide surface 64a to the tangential lower side, the guided portion 633 comes into contact with the stopper surface 66a of the second stopper 66.

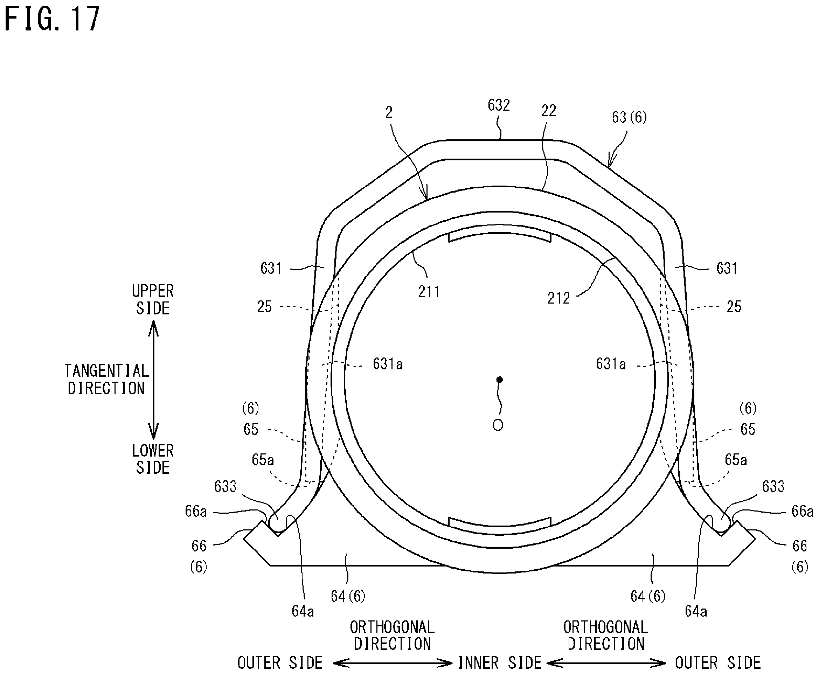

FIG. 17 illustrates a state where each guided portion 633 of the locking bar 63 has slid along the guide surface 64a of the guide 64 to the tangential lower side from the state shown in FIG. 16. As shown in FIG. 17, when the pair of guided portions 633 slide along the guide surfaces 64a of the respective guides 64 to the tangential lower side, the pair of locking portions 631 move away from each other toward the orthogonal outer sides. Accordingly, each locking portion 631 moves from a protruding position (FIG. 16) at which the portion 631a thereof protrudes radially inward with respect to the second inner circumferential surface portion 212 of the outer joint pipe 2, to a retracted position (FIG. 17) at which the portion 631a thereof is retracted radially outward with respect to the second inner circumferential surface portion 212. Therefore, each locking portion 631 is provided to the outer joint pipe 2 so as to be capable of protruding radially inward with respect to the second inner circumferential surface portion 212 and also capable of retracting radially outward with respect to the second inner circumferential surface portion 212.

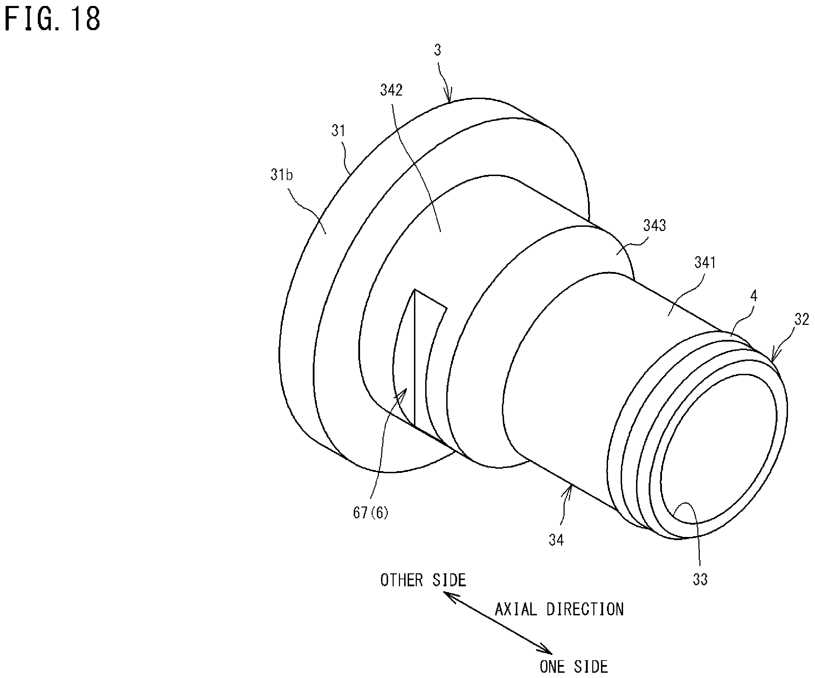

FIG. 18 is a perspective view showing an inner joint pipe 3 of the second embodiment. In FIG. 15, FIG. 16, and FIG. 18, the second restricting portion 6 further has a pair of locking grooves 67 (only one is shown in FIG. 18) provided in the inner joint pipe 3. The pair of locking grooves 67 are provided on the second outer circumferential surface portion 342 of the inner joint pipe 3. Specifically, the pair of locking grooves 67 are formed at equal intervals (180° intervals) in the circumferential direction on the second outer circumferential surface portion 342 of the inner joint pipe 3. Each locking groove 67 is, for example, a recessed groove that is long in the circumferential direction. The portion 631a of each locking portion 631 of the locking bar 63 fits and locks into each engagement groove 52 along the longitudinal direction thereof. Therefore, each locking groove 67 is formed with a size that allows the portion 631a of the locking portion 631 to fit thereinto.

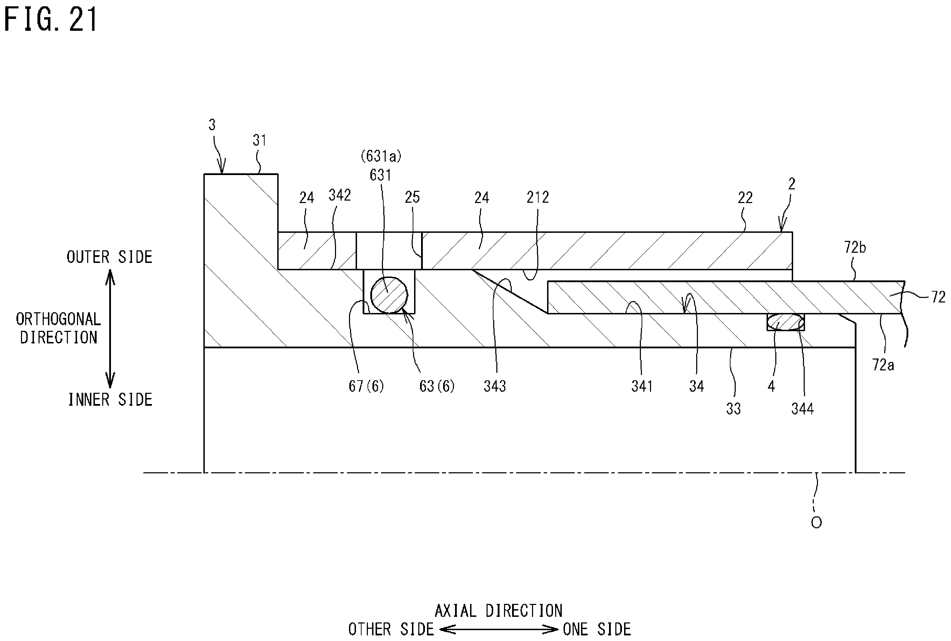

In a state where the second outer circumferential surface portion 342 of the inner joint pipe 3 is fitted onto the second inner circumferential surface portion 212 of the outer joint pipe 2, the pair of locking portions 631 of the second restricting portion 6 are locked in the respective locking grooves 67 at the protruding position (see FIG. 21). Therefore, the second restricting portion 6 restricts the relative movement of the inner joint pipe 3 with respect to the second inner circumferential surface portion 212 of the outer joint pipe 2 toward the other axial side.

In a state where the relative movement of the inner joint pipe 3 is restricted by the second restricting portion 6, the locking bar 63 is at a position shown in FIG. 16. From this state, when the worker pushes the operation portion 632 of the locking bar 63 toward the tangential lower side, the pair of guided portions 633 slide along the guide surfaces 64a of the respective guides 64 to the tangential lower side as shown in FIG. 17. Through this sliding movement, the pair of locking portions 631 move away from each other toward the orthogonal outer sides.

Accordingly, each locking portion 631 moves from the protruding position (FIG. 16) to the retracted position (FIG. 17), whereby the pair of locking portions 631 become released from the locking in the respective locking grooves 67. By relatively moving the outer joint pipe 2 with respect to the inner joint pipe 3 toward the other axial side from this state, the worker can relatively separate the outer joint pipe 2 from the inner joint pipe 3.

The other components of the present embodiment are the same as those of the first embodiment, and thus are designated by the same reference signs, and the description thereof is omitted.

### <Construction Method for Pipe Joint Structure>

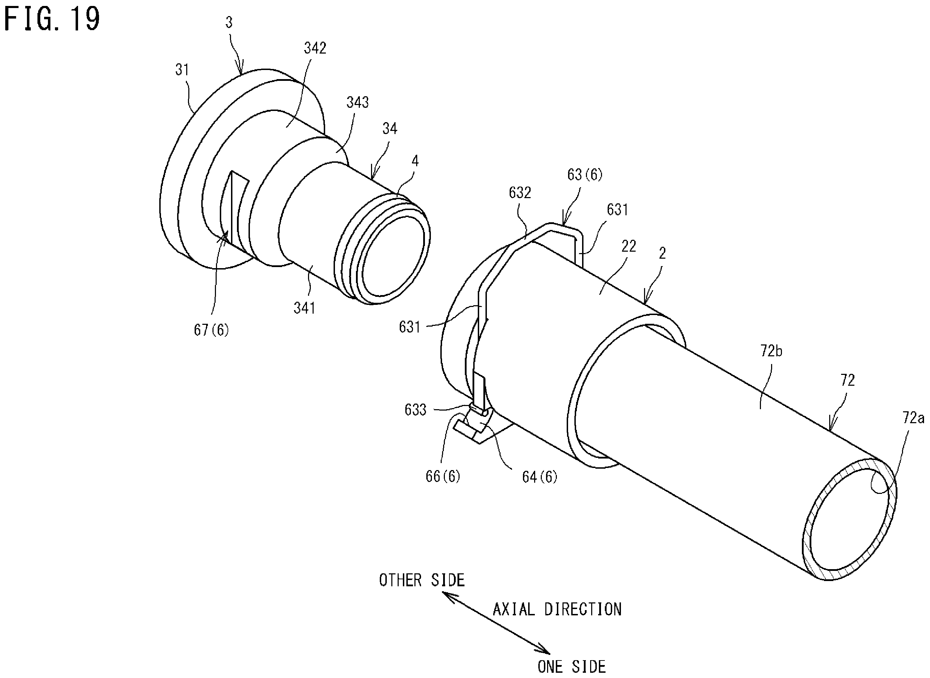

Next, a construction method in which the tube 72 is connected to the pipe joint structure 1 of the present embodiment, will be described. FIG. 19 to FIG. 21 illustrate the construction method. First, as in the first embodiment (see FIG. 9 to FIG. 11), the worker relatively inserts the end portion of the tube 72 into the inner circumferential side of the outer joint pipe 2 from the one axial side of the outer joint pipe 2 and fits the outer circumferential surface 72b of the end portion of the tube 72 onto the first inner circumferential surface portion 211 of the outer joint pipe 2. At this time, the locking bar 63 of the second restricting portion 6 is maintained in the state shown in FIG. 16.

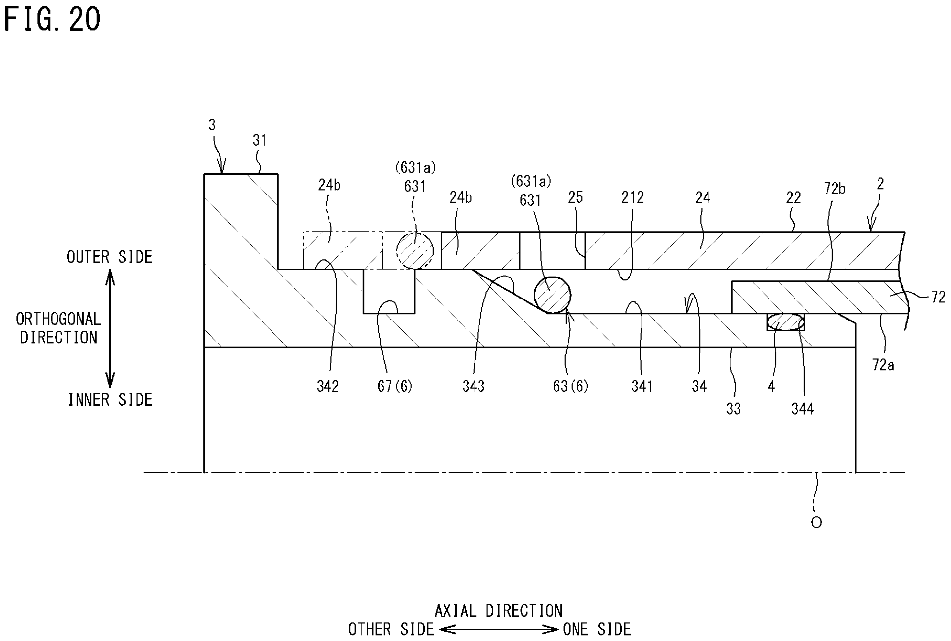

Next, as shown in FIG. 19, the worker relatively inserts the inner joint pipe 3 into the inner circumferential side of the outer joint pipe 2 from the other axial side of the outer joint pipe 2. This insertion work is the same as in the first embodiment, and thus the detailed description thereof is omitted. When the inner joint pipe 3 is relatively inserted into the inner circumferential side of the outer joint pipe 2, each locking portion 631 (portion 631a) of the locking bar 63 comes into contact with the tapered surface 343 of the inner joint pipe 3 as indicated by a solid line in FIG. 20.

From this state, when the worker relatively pushes the inner joint pipe 3 with respect to the outer joint pipe 2 toward the one axial side, the locking portion 631 moves from the orthogonal inner side toward the orthogonal outer side while relatively moving from the one axial side to the other axial side along the tapered surface 343. Accordingly, as indicated by an alternate long and two short dashes line in FIG. 20, the locking portion 631 moves from the protruding position (FIG. 16) to the retracted position (FIG. 17) and rides onto the second outer circumferential surface portion 342 of the inner joint pipe 3. At this time, each guided portion 633 of the locking bar 63 slides along the guide surface 64a of each guide 64, so that each locking portion 631 can be moved smoothly.

From this state, when the worker further relatively pushes the inner joint pipe 3 toward the one axial side, the locking portion 631 fits and is locked into the locking groove 67 of the second restricting portion 6 as shown in FIG. 21. Accordingly, the entire second outer circumferential surface portion 342 of the inner joint pipe 3 becomes fitted onto the second inner circumferential surface portion 212 of the outer joint pipe 2, and the entire first outer circumferential surface portion 341 of the inner joint pipe 3 becomes fitted onto the inner circumferential surface 72a of the end portion of the tube 72.

When each locking portion 631 is locked into the locking groove 67, the second restricting portion 6 restricts the relative movement of the inner joint pipe 3 with respect to the second inner circumferential surface portion 212 of the outer joint pipe 2 toward the other axial side as described above. Accordingly, the second restricting portion 6 can inhibit the inner joint pipe 3 from being pulled out relative to the second inner circumferential surface portion 212 of the outer joint pipe 2 toward the other axial side.

### <Advantageous Effects>

In the pipe joint structure 1 of the second embodiment as well, the worker can easily connect the tube 72 to the pipe joint structure 1 without using a tool, simply by relatively inserting the tube 72 into the inner circumferential side of the outer joint pipe 2 from the one axial side, and then relatively inserting the inner joint pipe 3 into the inner circumferential side of the outer joint pipe 2 from the other axial side. In addition, since the second restricting portion 6 is configured such that each locking portion 631 on the outer joint pipe 2 side is locked into the locking groove 67 on the inner joint pipe 3 side, the second restricting portion 6 can reliably restrict the relative movement of the inner joint pipe 3 with respect to the outer joint pipe 2.

### Third Embodiment

### <Configuration of Pipe Joint Structure>

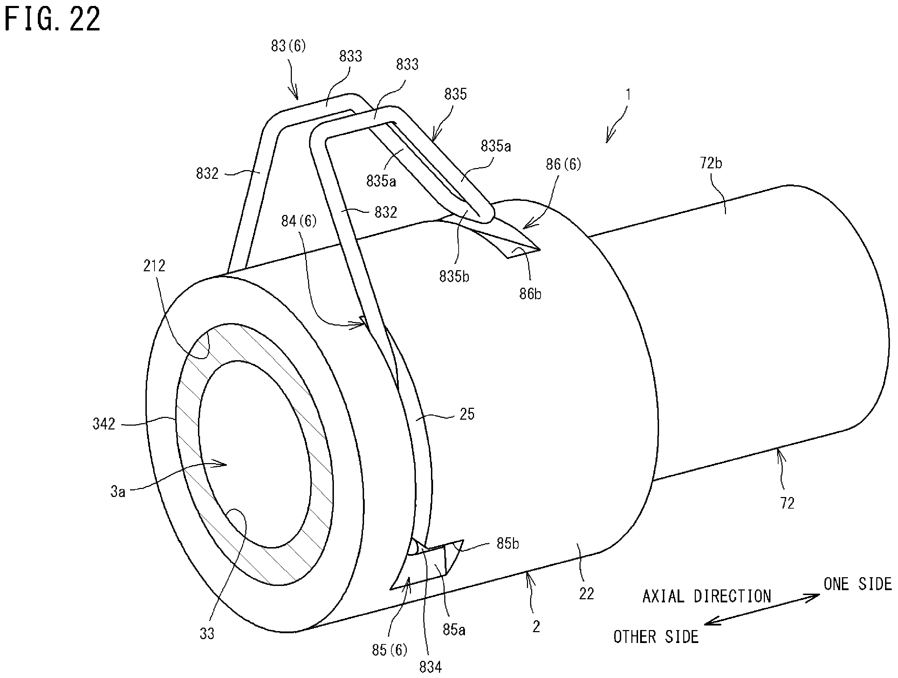

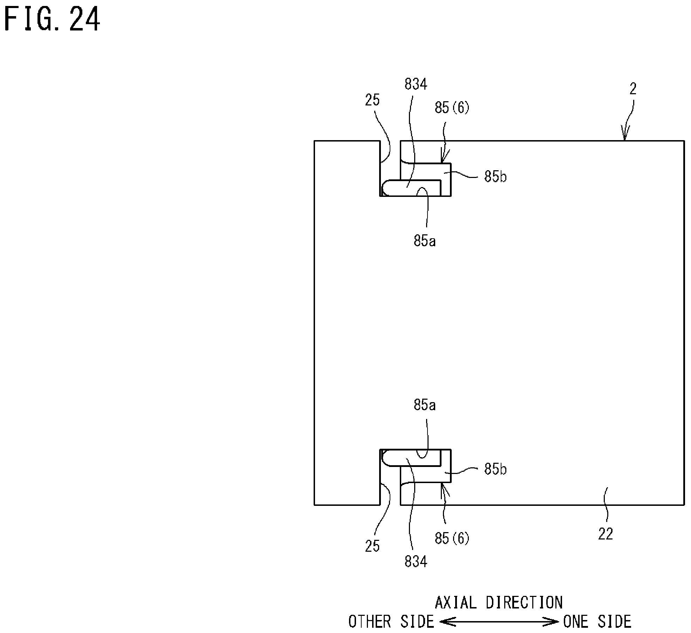

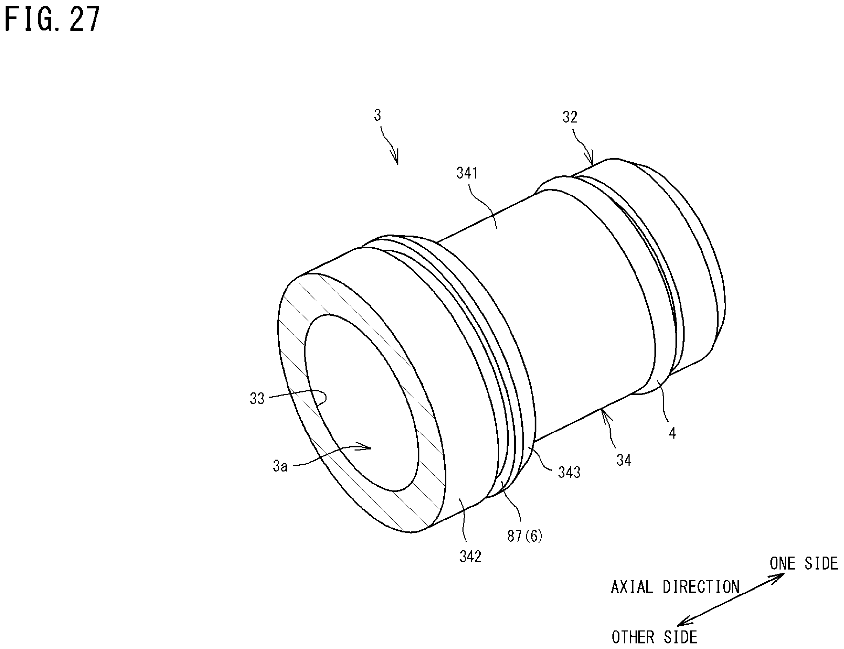

FIG. 22 is a perspective view showing a pipe joint structure 1 according to a third embodiment. FIG. 23 is a view of an outer joint pipe 2 of the pipe joint structure 1 as seen from the other axial side. FIG. 24 is a view of the outer joint pipe 2 as seen from the lower side of FIG. 23. As for an inner joint pipe 3 in FIG. 22, the one axial side thereof with respect to the annular portion 31 (see FIG. 6) is shown (the same applies to FIG. 27). The present embodiment is a modification of the second embodiment, and the configuration of the second restricting portion 6 is different from that of the second embodiment. In FIG. 22 to FIG. 24, the second restricting portion 6 of the present embodiment has a locking bar 83.

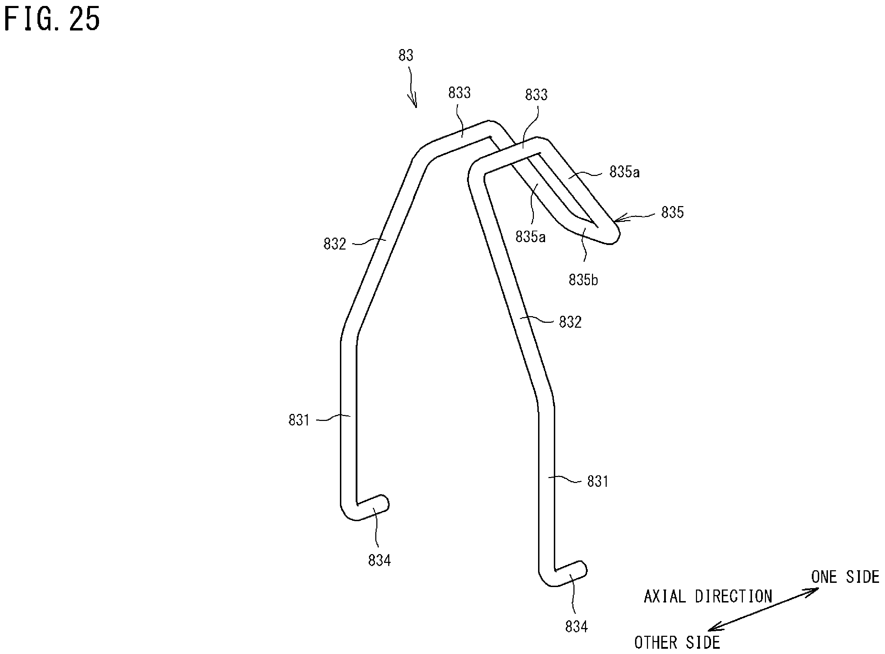

FIG. 25 is a perspective view showing the locking bar 83. In FIG. 22 to FIG. 25, the locking bar 83 is provided on the outer joint pipe 2 as a component separate from the outer joint pipe 2. The locking bar 83 is, for example, a rod-shaped component made of the same synthetic resin material as the outer joint pipe 2. The locking bar 83 of the present embodiment has a pair of locking portions 831, a pair of guided portions 832, a pair of operation portions 833, a pair of first stopper portions 834, and a second stopper portion 835.

The pair of locking portions 831 extend in a tangential direction on both sides in the orthogonal direction of the outer joint pipe 2, respectively, and are arranged parallel to each other with a predetermined interval therebetween. In the present embodiment, the up-down direction in FIG. 23 corresponds to the tangential direction of the outer joint pipe 2 in which the locking portions 831 extend. A portion 831a of each locking portion 831 in its longitudinal direction is inserted along the longitudinal direction of each through hole 25 of the outer joint pipe 2 and protrudes (is exposed) radially inward from the second inner circumferential surface portion 212 of the outer joint pipe 2.

The pair of guided portions 832 are inclined and extend from end portions on the tangential upper side of the respective locking portions 831 toward the orthogonal inner side and the tangential upper side. Most of each guided portion 832 is located on the tangential upper side with respect to the outer circumferential surface 22 of the outer joint pipe 2. The pair of operation portions 833 extend from end portions on the tangential upper side of the respective guided portions 832 toward the one axial side and are arranged parallel to each other in a state where the operation portions 833 are close to each other. In the present embodiment, the pair of operation portions 833 are close to each other to an extent that enables an operation of simultaneously pushing the operation portions 833 toward the tangential lower side to be performed with a single finger of the worker.

The pair of first stopper portions 834 bend from end portions on the tangential lower side of the respective locking portions 831 and extend toward the one axial side. The second stopper portion 835 couples end portions on the one axial side of the pair of operation portions 833. The second stopper portion 835 has a pair of extension portions 835a and a coupling portion 835b. Each extension portion 835a is inclined and extends from an end portion on the one axial side of each operation portion 833 toward the one axial side and the tangential lower side. The coupling portion 835b extends in the orthogonal direction between end portions on the tangential lower side of the pair of extension portions 835a and couples these end portions.

In FIG. 22 to FIG. 24, the second restricting portion 6 further has a pair of guide grooves 84, a pair of first stopper grooves 85, and a second stopper groove 86, which are formed in the outer joint pipe 2. The pair of guide grooves 84 are formed on the tangential upper side of the respective through holes 25 of the outer joint pipe 2. Each guide groove 84 communicates with the corresponding through hole 25 and extends from the through hole 25 toward the tangential upper side. Each guide groove 84 is a bottomed groove that is open on the outer circumferential surface 22 of the outer joint pipe 2.

On the bottom surface of each guide groove 84, a guide surface 84a that is inclined from the orthogonal inner side and the tangential upper side toward the orthogonal outer side and the tangential lower side, is formed. The tangential upper end of the guide surface 84a is connected to the outer circumferential surface 22 of the outer joint pipe 2. An end portion on the tangential lower side of each guided portion 832 of the locking bar 83 is in contact with the guide surface 84a of each guide groove 84. The end portion of the guided portion 832 is configured to slide obliquely along the corresponding guide surface 84a.

The pair of first stopper grooves 85 are formed on the tangential lower side of the respective through holes 25 of the outer joint pipe 2. Each first stopper groove 85 communicates with the corresponding through hole 25 and extends from the tangential lower side of the through hole 25 toward the one axial side. Each first stopper groove 85 is a bottomed groove that is open on the outer circumferential surface 22 of the outer joint pipe 2. A bottom surface 85a of each first stopper groove 85 extends in the tangential direction from the tangential lower end of the through hole 25 to the outer circumferential surface 22 of the outer joint pipe 2.

A stopper surface 85b is formed on the tangential upper side of each first stopper groove 85. The stopper surface 85b extends in the orthogonal direction from the tangential lower end of the through hole 25 to the outer circumferential surface 22 of the outer joint pipe 2. In the state shown in FIG. 22 and FIG. 23, each first stopper portion 834 of the locking bar 83 is in contact with the bottom surface 85a and the stopper surface 85b of each first stopper groove 85. Accordingly, the movement of the locking bar 83 toward the tangential upper side is restricted.

The second stopper groove 86 is formed on the one axial side of the outer circumferential surface 22 of the outer joint pipe 2. The second stopper groove 86 is formed at an intermediate position between the pair of guide grooves 84 and on the tangential lower side of the coupling portion 835b of the second stopper portion 835 of the locking bar 83. The second stopper groove 86 is a bottomed groove that is open on the outer circumferential surface 22 of the outer joint pipe 2. The bottom surface of the second stopper groove 86 serves as a stopper surface 86b. The stopper surface 86b extends to the outer circumferential surface 22 of the outer joint pipe 2 on both sides in the orthogonal direction. When the second stopper portion 835 of the locking bar 83 moves toward the tangential lower side, the coupling portion 835b of the second stopper portion 835 comes into contact with the stopper surface 86b of the second stopper groove 86.

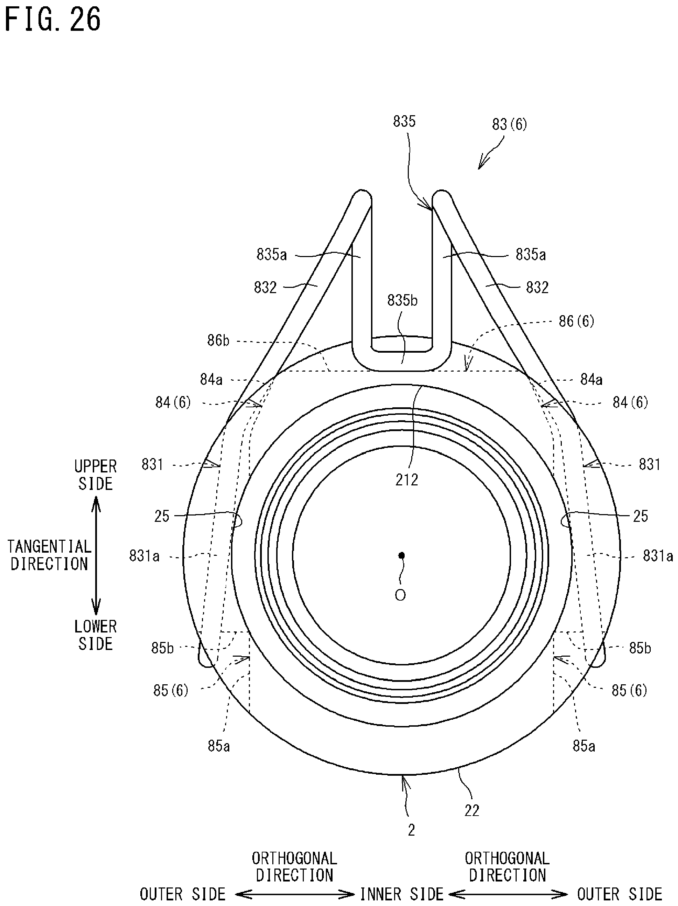

FIG. 26 illustrates a state where the locking bar 83 has moved to the tangential lower side from the state shown in FIG. 23. As shown in FIG. 26, when the locking bar 83 moves to the tangential lower side, end portions on the tangential lower side of the pair of guided portions 832 slide obliquely along the inclined guide surfaces 84a of the respective guide grooves 84 toward the orthogonal outer side and the tangential lower side. Accordingly, the pair of locking portions 831 move away from each other toward the orthogonal outer sides.

As a result, each locking portion 831 moves from a protruding position (FIG. 23) at which the portion 831a thereof protrudes radially inward with respect to the second inner circumferential surface portion 212 of the outer joint pipe 2, to a retracted position (FIG. 26) at which the portion 831a thereof is retracted radially outward with respect to the second inner circumferential surface portion 212. Therefore, each locking portion 831 is provided to the outer joint pipe 2 so as to be capable of protruding radially inward with respect to the second inner circumferential surface portion 212 and also capable of retracting radially outward with respect to the second inner circumferential surface portion 212. When each locking portion 831 moves from the protruding position to the retracted position, the second stopper portion 835 (coupling portion 835b) of the locking bar 83 comes into contact with the second stopper groove 86 (stopper surface 86b) of the outer joint pipe 2, thereby restricting the movement of the locking bar 83 toward the tangential lower side.

FIG. 27 is a cross-sectional perspective view showing an inner joint pipe 3 of the third embodiment. In FIG. 22, FIG. 23, and FIG. 27, the second restricting portion 6 further has a locking groove 87 provided in the inner joint pipe 3. The locking groove 87 is provided on the second outer circumferential surface portion 342 of the inner joint pipe 3. The locking groove 87 of the present embodiment is formed annularly over the entirety thereof in the circumferential direction of the second outer circumferential surface portion 342. Although not shown, the portion 831a of each locking portion 831 of the locking bar 83 fits and is locked into the locking groove 87. Therefore, the locking groove 87 is formed with a size that allows the portion 831a of the locking portion 831 to fit thereinto. As in the second embodiment, a pair of locking grooves 87 may be formed at equal intervals in the circumferential direction in the inner joint pipe 3.

In a state where the second outer circumferential surface portion 342 of the inner joint pipe 3 is fitted onto the second inner circumferential surface portion 212 of the outer joint pipe 2, the pair of locking portions 831 of the locking bar 83 are locked in the respective locking grooves 87 of the inner joint pipe 3 at the protruding position. Therefore, the second restricting portion 6 (the locking bar 83 and the locking groove 87) restricts the relative movement of the inner joint pipe 3 with respect to the second inner circumferential surface portion 212 of the outer joint pipe 2 toward the other axial side.

In a state where the relative movement of the inner joint pipe 3 is restricted by the second restricting portion 6, the locking bar 83 is at a position shown in FIG. 23. From this state, when releasing the restriction on movement of the inner joint pipe 3, the worker simultaneously pushes the pair of operation portions 833 of the locking bar 83 toward the tangential lower side using a single finger (e.g., a thumb). As a result, as shown in FIG. 26, the end portions on the tangential lower side of the pair of guided portions 832 slide obliquely along the guide surfaces 84a of the respective guide grooves 84 toward the orthogonal outer side and the tangential lower side. Through this sliding movement, the pair of locking portions 831 move away from each other toward the orthogonal outer sides.

Accordingly, each locking portion 831 moves from the protruding position (FIG. 23) to the retracted position (FIG. 26), whereby the pair of locking portions 831 become released from the locking in the respective locking grooves 87, and the restriction on movement of the inner joint pipe 3 by the second restricting portion 6 is released. By relatively moving the outer joint pipe 2 with respect to the inner joint pipe 3 toward the other axial side from this state, the worker can relatively separate the outer joint pipe 2 from the inner joint pipe 3.

The other components of the present embodiment are the same as those of the second embodiment, and thus are designated by the same reference signs, and the description thereof is omitted. In addition, if the locking bar 63, the locking portions 631, the guided portions 633, the guides 64, and the locking grooves 67 of the second embodiment are replaced with the locking bar 83, the locking portions 831, the guided portions 832, the guide grooves 84, and the locking grooves 87 of the third embodiment, respectively, a construction method for the pipe joint structure 1 in the third embodiment is the same as that of the second embodiment, and thus the description thereof is omitted.

### <Advantageous Effects>

In the pipe joint structure 1 of the third embodiment as well, the worker can easily connect the tube 72 to the pipe joint structure 1 without using a tool, simply by relatively inserting the tube 72 into the inner circumferential side of the outer joint pipe 2 from the one axial side, and then relatively inserting the inner joint pipe 3 into the inner circumferential side of the outer joint pipe 2 from the other axial side. In addition, since the second restricting portion 6 is configured such that each locking portion 831 on the outer joint pipe 2 side is locked into the locking groove 87 on the inner joint pipe 3 side, the second restricting portion 6 can reliably restrict the relative movement of the inner joint pipe 3 with respect to the outer joint pipe 2.

The locking bar 83 has the pair of operation portions 833 arranged parallel to each other in a state where the operation portions 833 are close to each other. Accordingly, when releasing the restriction on movement of the inner joint pipe 3 by the second restricting portion 6, the worker can simultaneously push the pair of operation portions 833 using a single finger. As a result, the burden on the finger of the worker can be reduced compared with the case of pushing the single operation portion 632 as in the second embodiment (see FIG. 15).

In the outer joint pipe 2, the pair of guide grooves 84 corresponding to the pair of guides 64 of the second embodiment (see FIG. 16) are formed. Accordingly, the outer joint pipe 2 can be manufactured more easily than in the case where the pair of guides 64 are provided on the outer circumferential surface 22 of the outer joint pipe 2. In addition, the pipe joint structure 1 can be made more compact in the orthogonal direction.

### Fourth Embodiment

### <Configuration of Pipe Joint Structure>

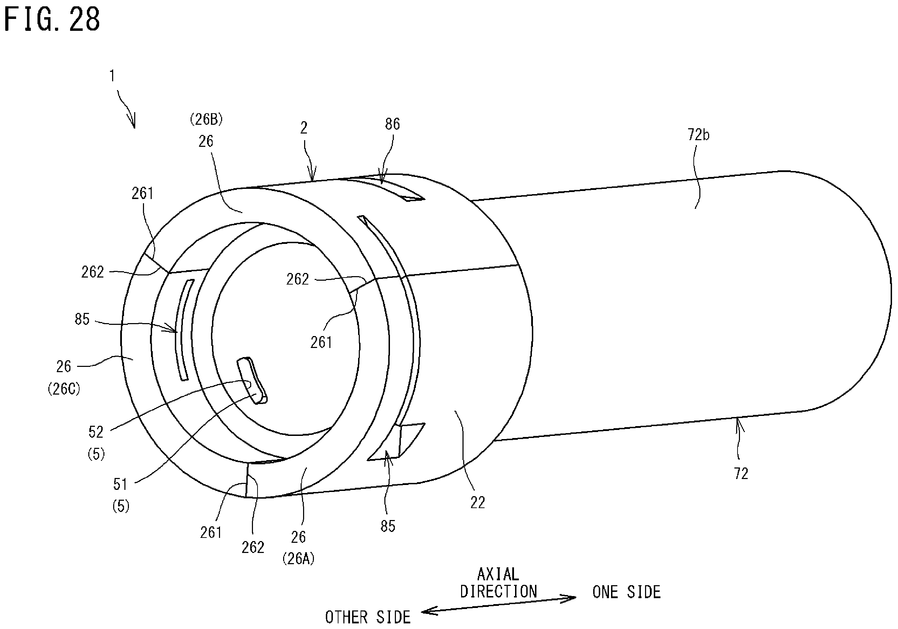

FIG. 28 is a perspective view showing a pipe joint structure 1 according to a fourth embodiment. In FIG. 28, an inner joint pipe 3 and a second restricting portion 6 are not shown. The present embodiment is a modification of the third embodiment, and the configuration of the outer joint pipe 2 is different from that of the third embodiment. In FIG. 28, the pipe joint structure 1 of the present embodiment is used, for example, when connecting a pipe 72 made of a material that is hard to deform such as metal, to the flow passage 71 of the fluid equipment 70 (see FIG. 3).

The pipe joint structure 1 includes an outer joint pipe 2 composed of a plurality of split bodies 26 that are split in the circumferential direction. The outer joint pipe 2 of the present embodiment is divided into three sections in the circumferential direction, and the plurality of split bodies 26 include a first split body 26A, a second split body 26B, and a third split body 26C. Hereinafter, when describing matters common to the first split body 26A, the second split body 26B, and the third split body 26C, these split bodies are collectively referred to as split bodies 26. Each split body 26 is formed in an arc shape. When the three split bodies 26 are combined in the circumferential direction, the three split bodies 26 form the cylindrical outer joint pipe 2.

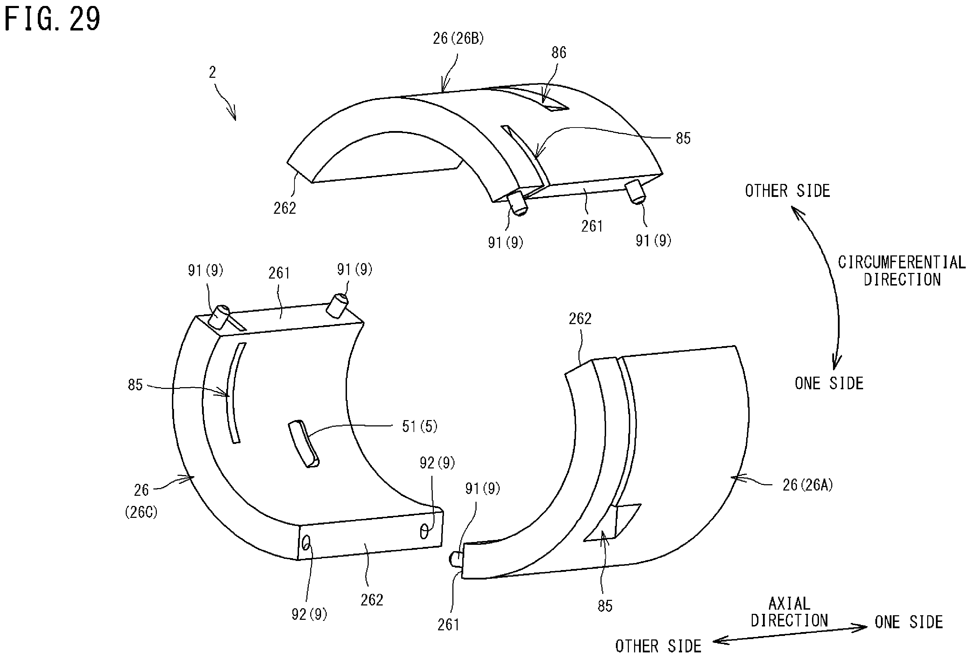

FIG. 29 is a perspective view showing a state where the outer joint pipe 2 of the present embodiment is disassembled. In FIG. 28 and FIG. 29, the engagement projection 51 of the first restricting portion 5 is integrally provided on the one axial side of the inner circumferential surface of each split body 26. Therefore, the engagement projection 51 of the first restricting portion 5 is provided at three locations in the circumferential direction on the first inner circumferential surface portion 211 of the outer joint pipe 2 of the present embodiment. Although not shown, the engagement groove 52 (see FIG. 3) of the first restricting portion 5 with which the engagement projection 51 engages is also provided at three locations in the circumferential direction on an outer circumferential surface 72b of an end portion of the pipe 72.

A portion of a first stopper groove 85 is formed on each of the outer circumferences of the first split body 26A and the third split body 26C. The other portion of each first stopper groove 85 and a second stopper groove 86 are formed on the outer circumference of the second split body 26B. Hereinafter, in the present invention, for convenience, the clockwise direction in FIG. 29 is referred to as "one circumferential side", and the counterclockwise direction in FIG. 29 is referred to as "other circumferential side".

Each split body 26 has a first end surface 261 on the one circumferential side and has a second end surface 262 on the other circumferential side. Of the split bodies 26, 26 adjacent to each other in the circumferential direction, the first end surface 261 of one split body 26 comes into contact with the second end surface 262 of the other split body 26.

The pipe joint structure 1 of the present embodiment further includes a fixing portion 9 that fixes the split bodies 26, 26 adjacent to each other in the circumferential direction. The number of fixing portions 9 of the present embodiment is equal to the number of split bodies 26. Each fixing portion 9 has a projecting portion 91 provided on the first end surface 261 of one split body 26 out of the split bodies 26, 26 adjacent to each other in the circumferential direction, and a recess 92 provided on the second end surface 262 of the other split body 26.

A pair of projecting portions 91 are provided at intervals in the axial direction on the first end surface 261. Each projecting portion 91 is formed, for example, in a circular column shape. Each projecting portion 91 is integrally provided on the first end surface 261 and protrudes from the first end surface 261 toward the one circumferential side (the other split body 26).

A pair of recesses 92 are provided at intervals in the axial direction on the second end surface 262. Each recess 92 is formed so as to be recessed toward the one circumferential side, at a position corresponding to each projecting portion 91 on the second end surface 262. Each recess 92 is composed of, for example, a circular hole and is formed with a size that allows the entire projecting portion 91 to fit thereinto.

When the pair of projecting portions 91 of each fixing portion 9 fits into the respective opposing recesses 92, the first end surface 261 on which the projecting portions 91 are provided comes into contact with the second end surface 262 on which the recesses 92 are provided. Accordingly, the split bodies 26, 26 adjacent to each other in the circumferential direction are fixed to each other by the fixing portion 9 when combined with each other. The other components of the present embodiment are the same as those of the third embodiment, and thus are designated by the same reference signs, and the description thereof is omitted.

The projecting portions 91 and the recesses 92 of each fixing portion 9 may be provided on the second end surface 262 of the other split body 26 and the first end surface 261 of the one split body 26, respectively. The shapes and numbers of projecting portions 91 and recesses 92 of each fixing portion 9 are not limited to the present embodiment. For example, each of the numbers of projecting portions 91 and recesses 92 of each fixing portion 9 may be one or may be three or more.

### <Construction Method for Pipe Joint Structure>

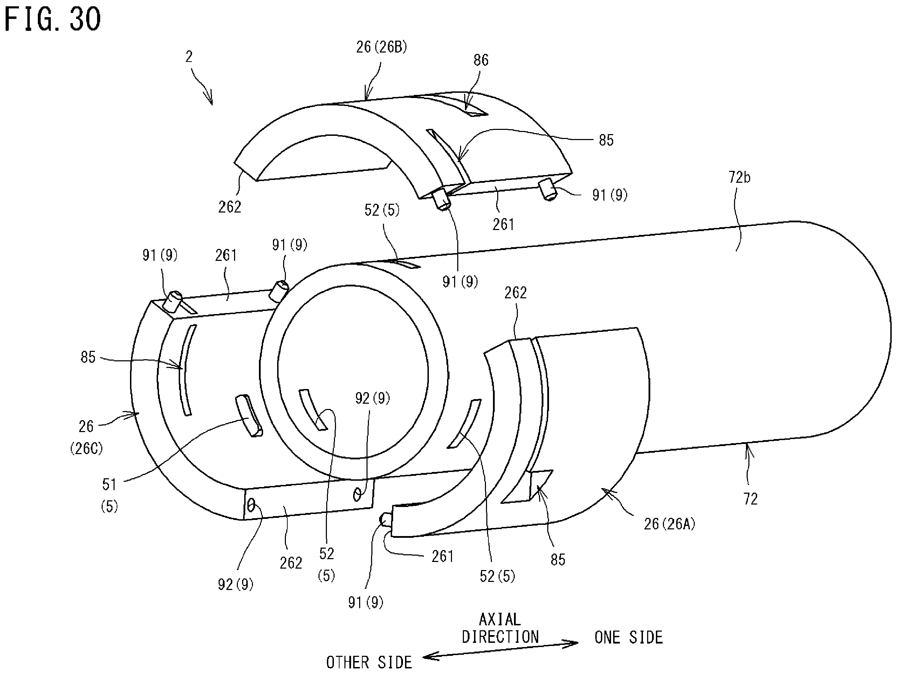

Next, a construction method in which the pipe 72 is connected to the pipe joint structure 1 of the present embodiment, will be described. FIG. 30 illustrates the construction method. First, as shown in FIG. 30, the worker places the one axial side of each of the three split bodies 26 on the radially outer side of the outer circumferential surface 72b of the end portion of the pipe 72 and combines these split bodies 26 in the circumferential direction.

At this time, the projecting portions 91 of each fixing portion 9 are fitted into the opposing recesses 92, and the first end surface 261 on which the projecting portions 91 are provided is brought into contact with the second end surface 262 on which the recesses 92 are provided. Accordingly, since the projecting portions 91 fit into the recesses 92, the split bodies 26, 26 adjacent to each other in the circumferential direction are fixed to each other by the fixing portion 9 in a state of being combined with each other. By combining the three split bodies 26 in the circumferential direction in this manner, the outer circumferential surface 72b of the pipe 72 becomes fitted onto the first inner circumferential surface portion 211 of the outer joint pipe 2 as shown in FIG. 28 (see also FIG. 3).

When the pipe 72 is fitted to the outer joint pipe 2, the engagement projection 51 of each split body 26 of the outer joint pipe 2 engages with the engagement groove 52 provided on the outer circumferential surface 72b of the pipe 72. Accordingly, the first restricting portion 5 can inhibit the pipe 72 from being pulled out relative to the first inner circumferential surface portion 211 of the outer joint pipe 2 toward the one axial side.

Next, the worker relatively inserts the inner joint pipe 3 into the inner circumferential side of the outer joint pipe 2 from the other axial side of the outer joint pipe 2. The method for this is the same as in the third embodiment, and thus the description thereof is omitted.

### <Advantageous Effects>

According to the pipe joint structure 1 of the fourth embodiment, the outer circumferential surface 72b of the pipe 72 is fitted onto the first inner circumferential surface portion 211 of the outer joint pipe 2 by placing the one axial side of each of the plurality of split bodies 26, which constitute the outer joint pipe 2, on the radially outer side of the outer circumferential surface 72b of the pipe 72, and combining the plurality of split bodies 26 in the circumferential direction. Accordingly, the first restricting portion 5 can restrict the relative movement of the pipe 72 with respect to the first inner circumferential surface portion 211 of the outer joint pipe 2 toward the one axial side. In this state, by relatively inserting the inner joint pipe 3 into the inner circumferential side of the outer joint pipe 2 from the other axial side, the first outer circumferential surface portion 341 of the inner joint pipe 3 is fitted onto the inner circumferential surface 72a of the pipe 72, and the second outer circumferential surface portion 342 of the inner joint pipe 3 is fitted onto the second inner circumferential surface portion 212 of the outer joint pipe 2.

Accordingly, the seal member 4 seals between the first outer circumferential surface portion 341 of the inner joint pipe 3 and the inner circumferential surface 72a of the pipe 72, and the second restricting portion 6 can restrict the relative movement of the inner joint pipe 3 with respect to the second inner circumferential surface portion 212 of the outer joint pipe 2 toward the other axial side. Therefore, the worker can easily connect the pipe 72 to the pipe joint structure 1 without using a tool, simply by fitting the outer circumferential surface 72b of the pipe 72 to the inner circumferential side of the outer joint pipe 2, and then relatively inserting the inner joint pipe 3 into the inner circumferential side of the outer joint pipe 2 from the other axial side.

Further, in the pipe joint structure 1 of the first embodiment (see FIG. 3), each engagement projection 51 of the first restricting portion 5 protrudes radially inward from the inner circumferential side of the outer joint pipe 2, and thus, when relatively inserting the tube (pipe) 72 into the inner circumferential side of the outer joint pipe 2 from the one axial side, it is necessary to insert the tube 72 while deforming the insertion end portion of the tube 72. Therefore, the pipe 72 made of a material that is hard to deform such as metal cannot be connected to the pipe joint structure 1. In contrast, in the pipe joint structure 1 of the present embodiment, the outer circumferential surface 72b of the pipe 72 can be fitted onto the first inner circumferential surface portion 211 of the outer joint pipe 2 without being obstructed by each engagement projection 51 of the first restricting portion 5, by combining the plurality of split bodies 26 in the circumferential direction on the radially outer side of the outer circumferential surface 72b of the pipe 72 as described above. Therefore, when fitting the outer circumferential surface 72b of the pipe 72 onto the first inner circumferential surface portion 211 of the outer joint pipe 2, it is not necessary to deform the pipe 72. Thus, even the pipe 72 made of a material that is hard to deform can be connected to the pipe joint structure 1.

Since the split bodies 26, 26 of the outer joint pipe 2 adjacent to each other in the circumferential direction are fixed to each other by the fixing portion 9, each split body 26 of the outer joint pipe 2 can be inhibited from falling off from the outer circumferential surface 72b of the pipe 72 and the second outer circumferential surface portion 342 of the inner joint pipe 3.

Since each fixing portion 9 is configured such that the projecting portions 91 fit into the recesses 92, each fixing portion 9 can reliably fix the split bodies 26, 26 adjacent to each other in the circumferential direction, to each other.

### Fifth Embodiment

### <Configuration of Pipe Joint Structure>

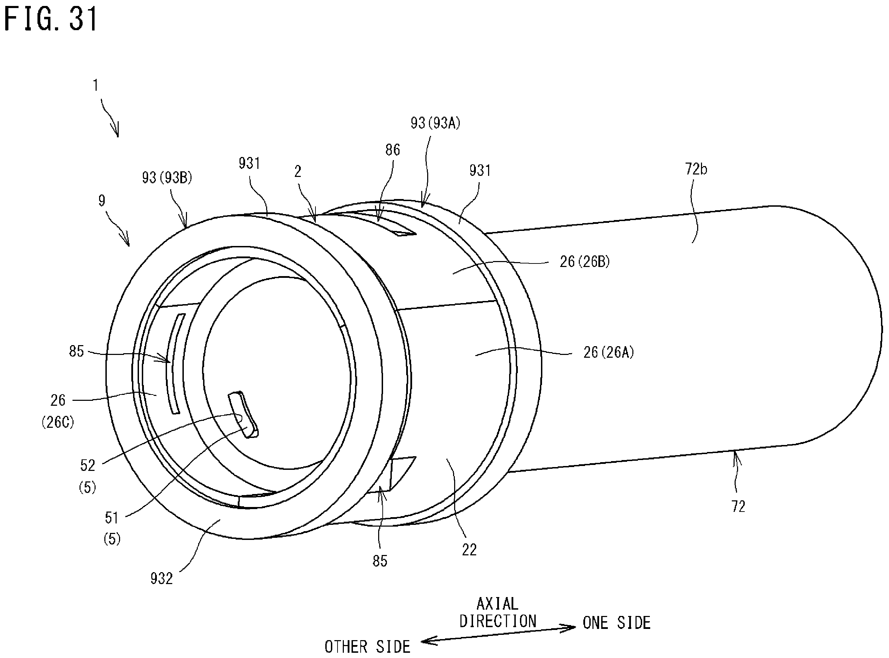

FIG. 31 is a perspective view showing a pipe joint structure 1 according to a fifth embodiment. In FIG. 31, an inner joint pipe 3 and a second restricting portion 6 are not shown. The present embodiment is a modification of the fourth embodiment, and the configuration of the fixing portion 9 is different from that of the fourth embodiment. In FIG. 31, a fixing portion 9 of the pipe joint structure 1 of the present embodiment has a pair of ring members 93 provided at both axial end portions of the outer joint pipe 2.

The pair of ring members 93 include a first ring member 93A and a second ring member 93B. In a state where the three split bodies 26 are combined in the circumferential direction, the first ring member 93A is attached to the end portion on the one axial side of the outer joint pipe 2, and the second ring member 93B is attached to the end portion on the other axial side of the outer joint pipe 2. Hereinafter, when describing matters common to the first ring member 93A and the second ring member 93B, these ring members are collectively referred to as ring members 93.

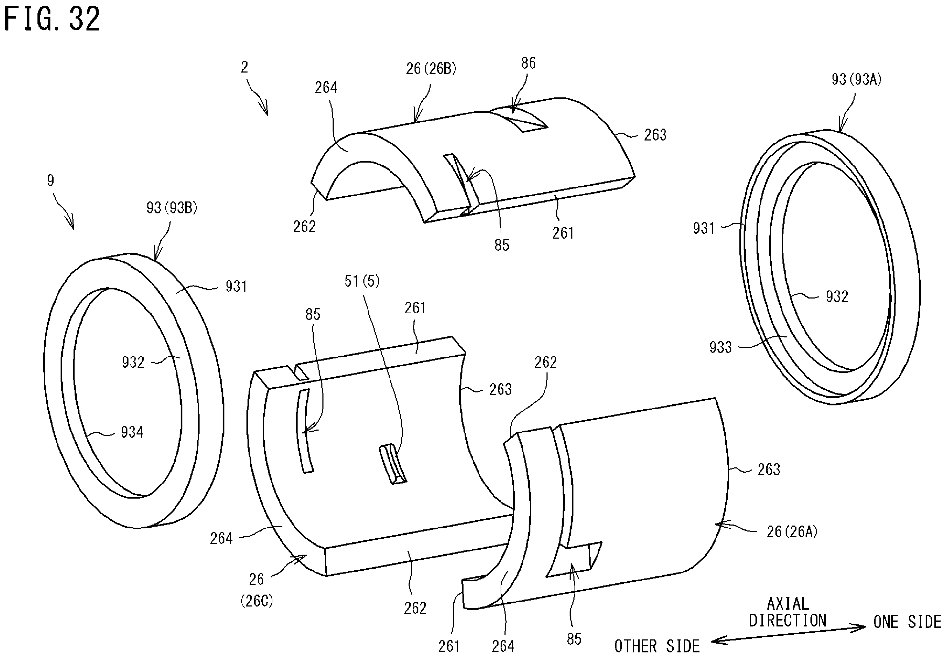

FIG. 32 is a perspective view showing a state where the outer joint pipe 2 and the fixing portion 9 of the present embodiment are disassembled. In FIG. 31 and FIG. 32, each ring member 93 of the fixing portion 9 has a cylindrical portion 931 and an annular portion 932. The inner diameter of the cylindrical portion 931 is slightly larger than the outer diameter of each split body 26 (outer joint pipe 2). The inner circumferential surface of the cylindrical portion 931 is fitted to an axial end portion of the outer circumferential surface 22 of the outer joint pipe 2. Accordingly, the movement of each split body 26 of the outer joint pipe 2 toward the radially outer side is restricted.

In the first ring member 93A, the annular portion 932 is integrally formed on the one axial side of the cylindrical portion 931. In the second ring member 93B, the annular portion 932 is integrally formed on the other axial side of the cylindrical portion 931. The inner diameter of the annular portion 932 of each ring member 93 is smaller than the outer diameter of each split body 26 and larger than the outer diameter of the pipe 72.

The annular portion 932 of the first ring member 93A has an end surface 933 that faces one end surface 263 on the one axial side of each split body 26. When the inner circumferential surface of the cylindrical portion 931 of the first ring member 93A is fitted onto the outer circumferential surface 22 of the outer joint pipe 2, the end surface 933 of the first ring member 93A comes into contact with the one end surface 263 of each split body 26. Accordingly, the movement of each split body 26 toward the one axial side is restricted.

The annular portion 932 of the second ring member 93B has an end surface 934 that faces another end surface 264 on the other axial side of each split body 26. When the inner circumferential surface of the cylindrical portion 931 of the second ring member 93B is fitted onto the outer circumferential surface 22 of the outer joint pipe 2, the end surface 934 of the second ring member 93B comes into contact with the other end surface 264 of each split body 26. Accordingly, the movement of each split body 26 toward the other axial side is restricted.

Accordingly, when the ring members 93 are attached to both axial end portions of the outer joint pipe 2, respectively, in a state where the three split bodies 26 are combined in the circumferential direction, the split bodies 26, 26 adjacent to each other in the circumferential direction are fixed to each other.

### <Construction Method for Pipe Joint Structure>

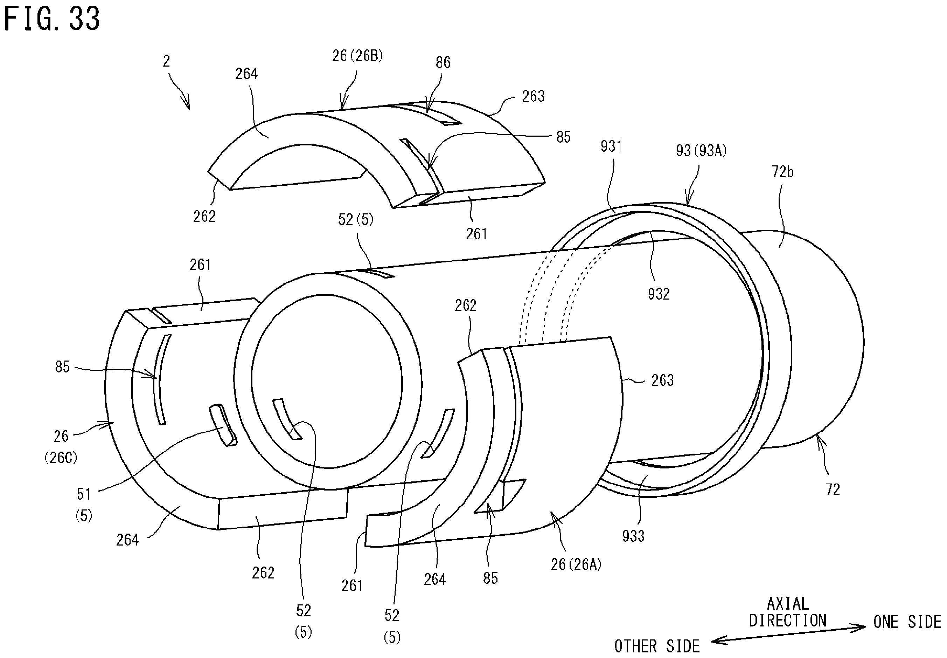

Next, a construction method in which the pipe 72 is connected to the pipe joint structure 1 of the present embodiment, will be described. FIG. 33 illustrates the construction method. First, as shown in FIG. 33, the worker fits the first ring member 93A onto the radially outer side of the outer circumferential surface 72b of the end portion of the pipe 72 until the first ring member 93A reaches the end thereof on the one axial side.

Next, on the other axial side with respect to the first ring member 93A, the worker places the one axial side of each of the three split bodies 26 on the radially outer side of the outer circumferential surface 72b of the end portion of the pipe 72 and combines these split bodies 26 in the circumferential direction. Specifically, of the split bodies 26, 26 adjacent to each other in the circumferential direction, the first end surface 261 of one split body 26 is brought into contact with the second end surface 262 of the other split body 26 (see FIG. 28).

Next, the worker attaches the first ring member 93A to the end portion on the one axial side of the outer joint pipe 2 and also attaches the second ring member 93B to the end portion on the other axial side of the outer joint pipe 2 (see FIG. 31). At this time, the inner circumferential surface of the cylindrical portion 931 of each ring member 93 is fitted onto the axial end portion of the outer circumferential surface 22 of the outer joint pipe 2, thereby restricting the movement of each split body 26 toward the radially outer side. In addition, the end surfaces 933 and 934 (see FIG. 32) of the respective ring members 93 come into contact with the one end surface 263 and the other end surface 264 of each split body 26, respectively, thereby restricting the movement of each split body 26 toward both sides in the axial direction. Accordingly, the split bodies 26, 26 of the outer joint pipe 2 adjacent to each other in the circumferential direction are fixed to each other.

Next, the worker relatively inserts the inner joint pipe 3 into the inner circumferential side of the outer joint pipe 2 from the other axial side of the outer joint pipe 2. The method for this is the same as in the third embodiment, and thus the description thereof is omitted.

### <Advantageous Effects>

In the pipe joint structure 1 of the fifth embodiment as well, the worker can easily connect the pipe 72 to the pipe joint structure 1 without using a tool, simply by fitting the outer circumferential surface 72b of the pipe 72 to the inner circumferential side of the outer joint pipe 2, and then relatively inserting the inner joint pipe 3 into the inner circumferential side of the outer joint pipe 2 from the other axial side. In addition, the outer circumferential surface 72b of the pipe 72 can be fitted onto the first inner circumferential surface portion 211 of the outer joint pipe 2 without being obstructed by each engagement projection 51 of the first restricting portion 5, by combining the plurality of split bodies 26 in the circumferential direction on the radially outer side of the outer circumferential surface 72b of the pipe 72 as described above. Therefore, when fitting the outer circumferential surface 72b of the pipe 72 onto the first inner circumferential surface portion 211 of the outer joint pipe 2, it is not necessary to deform the pipe 72. Thus, even the pipe 72 made of a material that is hard to deform can be connected to the pipe joint structure 1.

Since the split bodies 26, 26 of the outer joint pipe 2 adjacent to each other in the circumferential direction are fixed to each other by the fixing portion 9, each split body 26 of the outer joint pipe 2 can be inhibited from falling off from the outer circumferential surface 72b of the pipe 72 and the second outer circumferential surface portion 342 of the inner joint pipe 3.

Since the fixing portion 9 is configured such that the pair of ring members 93 are attached to both axial end portions of the outer joint pipe 2, the fixing portion 9 can reliably fix the split bodies 26, 26 adjacent to each other in the circumferential direction, to each other.

### Others

Each of the embodiments disclosed herein is merely illustrative and not restrictive in all aspects. For example, the pipe joint structure 1 of the present invention can be applied to semiconductor manufacturing equipment, the liquid crystal/organic EL field, the medical/pharmaceutical field, automotive-related fields, etc., in addition to hydrogen carrier production apparatuses. In addition, the seal member 4 may be a packing or the like instead of an O-ring.

The first restricting portion 5 is not limited to the above embodiments. For example, each engagement groove 52 may be a recessed groove or the like that does not penetrate the tube (pipe) 72 in the thickness direction thereof. In addition, each engagement groove 52 may be located on the one axial side with respect to the seal member 4. In such a case, a seal structure may be additionally provided between the tube (pipe) 72 and the outer joint pipe 2 on the one axial side with respect to the engagement groove 52.

The numbers of engagement projections 51 and engagement grooves 52 of the first restricting portion 5 provided in the circumferential direction may each be one or three or more. In addition, each engagement projection 51 may be a component separate from the outer joint pipe 2. Further, each engagement projection 51 may be provided on the outer circumferential surface 72b of the end portion of the tube 72, and each engagement groove 52 may be provided on the first inner circumferential surface portion 211 of the outer joint pipe 2.

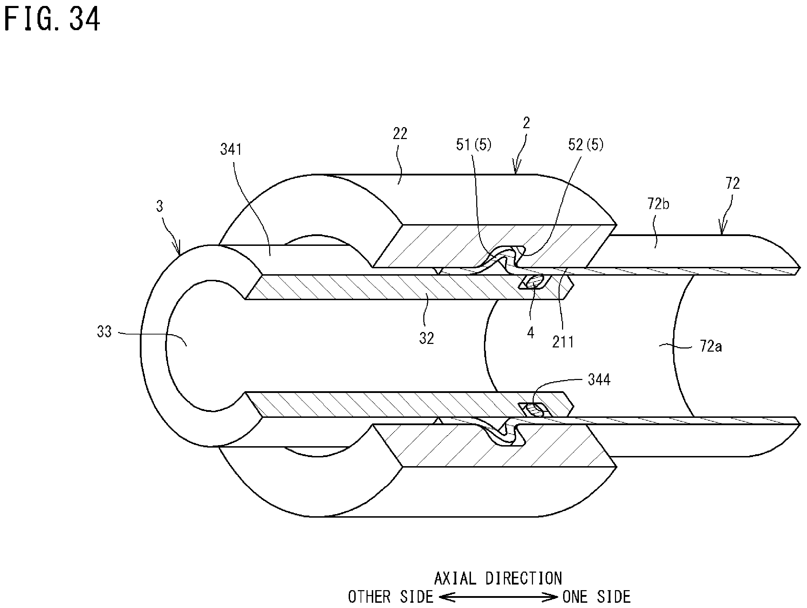

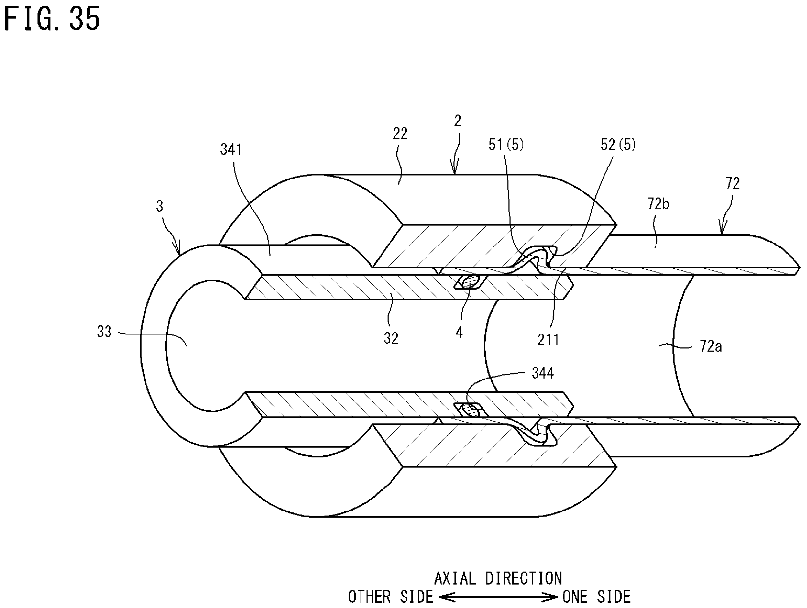

For example, as shown in FIG. 34, an annular engagement projection 51 may be integrally provided by causing a part in the axial direction of the end portion of the tube 72 (pipe) to protrude radially outward, and an annular engagement groove 52 with which the engagement projection 51 engages may be provided on the first inner circumferential surface portion 211 of the outer joint pipe 2. The engagement groove 52 is formed so as to be located on the other axial side with respect to the seal member 4 in FIG. 34, but may be formed so as to be located on the one axial side with respect to the seal member 4 as shown in FIG. 35. The first restricting portions 5 shown in FIG. 34 and FIG. 35 are effective when it is difficult to machine the engagement groove 52 in the tube (pipe) 72 as in the first embodiment (see FIG. 7).

The second restricting portion 6 is not limited to the above embodiments. For example, the numbers of hook portions 61 and hook grooves 62 provided in the circumferential direction may each be one or three or more. In addition, each hook portion 61 may be a component separate from the outer joint pipe 2. Further, each hook portion 61 may be provided on the second outer circumferential surface portion 342 of the inner joint pipe 3, and each hook groove 62 may be provided on the second inner circumferential surface portion 212 of the outer joint pipe 2.

The pipe joint structures 1 of the fourth and fifth embodiments each include the fixing portion 9 that fixes the split bodies 26, 26 of the outer joint pipe 2 adjacent to each other in the circumferential direction, but instead of the fixing portion 9, the split bodies 26, 26 adjacent to each other in the circumferential direction may be bonded together using an adhesive or the like.

In each of the fourth and fifth embodiments, the outer joint pipe 2 may be composed of two split bodies 26 or four or more split bodies 26 that are split in the circumferential direction.

The pipe 72 made of a material that is hard to deform is connected to each of the pipe joint structures 1 of the fourth and fifth embodiments, but a deformable pipe (tube) 72 made of a synthetic resin or the like may be connected thereto as in the first embodiment. In such a case, when fitting the outer circumferential surface 72b of the pipe 72 onto the first inner circumferential surface portion 211 of the outer joint pipe 2, the plurality of split bodies 26 of the outer joint pipe 2 may be combined in the circumferential direction on the radially outer side of the outer circumferential surface 72b of the pipe 72, or the plurality of split bodies 26 may be combined in the circumferential direction to fix the adjacent split bodies 26, 26 by the fixing portion 9, and then the end portion of the pipe 72 may be inserted from the one axial side of the outer joint pipe 2 while being deformed.

### LIST OF REFERENCE SIGNS

1 pipe joint structure
2 outer joint pipe
3 inner joint pipe
4 seal member
5 first restricting portion
6 second restricting portion
9 fixing portion
26 split body
51 engagement projection
52 engagement groove
61 hook portion
62 hook groove
67 locking groove
70 fluid equipment (fluid device)
71 flow passage
72 tube (pipe)
72a inner circumferential surface
72b outer circumferential surface
87 locking groove
91 projecting portion
92 recess
211 first inner circumferential surface portion
212 second inner circumferential surface portion
341 first outer circumferential surface portion
342 second outer circumferential surface portion
631 locking portion
831 locking portion

## Claims

1. A pipe joint structure for connecting a pipe to a flow passage formed in a fluid device, the pipe joint structure comprising:
an outer joint pipe having a first inner circumferential surface portion on one axial side and a second inner circumferential surface portion on another axial side, an outer circumferential surface of the pipe being fitted onto the first inner circumferential surface portion from the one axial side;
an inner joint pipe having, on the one axial side, a first outer circumferential surface portion that is fitted onto an inner circumferential surface of the pipe from the other axial side, having, on the other axial side, a second outer circumferential surface portion that is fitted onto the second inner circumferential surface portion of the outer joint pipe from the other axial side, and having, on the other axial side, an end portion that is connected to the fluid device;
an annular seal member provided on the first outer circumferential surface portion of the inner joint pipe and configured to seal between the first outer circumferential surface portion and the inner circumferential surface of the pipe;
a first restricting portion configured to restrict relative movement of the pipe with respect to the first inner circumferential surface portion toward the one axial side when the outer circumferential surface of the pipe is fitted onto the first inner circumferential surface portion of the outer joint pipe; and
a second restricting portion configured to restrict relative movement of the inner joint pipe with respect to the second inner circumferential surface portion toward the other axial side when the second outer circumferential surface portion of the inner joint pipe is fitted onto the second inner circumferential surface portion of the outer joint pipe.

2. A pipe joint structure for connecting a pipe to a flow passage formed in a fluid device, the pipe joint structure comprising:
an outer joint pipe having a first inner circumferential surface portion on one axial side and a second inner circumferential surface portion on another axial side, an outer circumferential surface of the pipe being fitted onto the first inner circumferential surface portion;
an inner joint pipe having, on the one axial side, a first outer circumferential surface portion that is fitted onto an inner circumferential surface of the pipe from the other axial side, having, on the other axial side, a second outer circumferential surface portion that is fitted onto the second inner circumferential surface portion of the outer joint pipe from the other axial side, and having, on the other axial side, an end portion that is connected to the fluid device;
an annular seal member provided on the first outer circumferential surface portion of the inner joint pipe and configured to seal between the first outer circumferential surface portion and the inner circumferential surface of the pipe;
a first restricting portion configured to restrict relative movement of the pipe with respect to the first inner circumferential surface portion toward the one axial side when the outer circumferential surface of the pipe is fitted onto the first inner circumferential surface portion of the outer joint pipe; and
a second restricting portion configured to restrict relative movement of the inner joint pipe with respect to the second inner circumferential surface portion toward the other axial side when the second outer circumferential surface portion of the inner joint pipe is fitted onto the second inner circumferential surface portion of the outer joint pipe, wherein
the outer joint pipe is composed of a plurality of split bodies that are split in a circumferential direction.

3. The pipe joint structure according to claim 1 or claim 2, wherein
the first restricting portion includes an engagement projection provided on one of the first inner circumferential surface portion of the outer joint pipe and the outer circumferential surface of the pipe, and an engagement groove provided on the other, and
the relative movement of the pipe is restricted when the engagement projection engages with the engagement groove.

4. The pipe joint structure according to claim 3, wherein the engagement groove is located on the other axial side with respect to the seal member.

5. The pipe joint structure according to claim 1 or claim 2, wherein
the second restricting portion includes a hook portion integrally provided on one of the second inner circumferential surface portion of the outer joint pipe and the second outer circumferential surface portion of the inner joint pipe, and a hook groove provided on the other, and
the relative movement of the inner joint pipe is restricted when the hook portion is caught in the hook groove.

6. The pipe joint structure according to claim 1 or claim 2, wherein
the second restricting portion includes a locking portion that is provided on the outer joint pipe as a component separate from the outer joint pipe and is configured to be capable of protruding inward in a radial direction with respect to the second inner circumferential surface portion, and a locking groove provided on the second outer circumferential surface portion of the inner joint pipe, and
the relative movement of the inner joint pipe is restricted when the locking portion protrudes inward in the radial direction and locks into the locking groove.

7. A construction method for connecting, to the pipe joint structure according to claim 1 for connecting a pipe to a flow passage formed in a fluid device, the pipe, the construction method comprising, in the order stated:
a step of relatively inserting the pipe into an inner circumferential side of the outer joint pipe from the one axial side of the outer joint pipe and fitting an outer circumferential surface of the pipe onto the first inner circumferential surface portion of the outer joint pipe; and
a step of relatively inserting the inner joint pipe into the inner circumferential side of the outer joint pipe from the other axial side of the outer joint pipe, fitting the first outer circumferential surface portion of the inner joint pipe onto an inner circumferential surface of the pipe, and fitting the second outer circumferential surface portion of the inner joint pipe onto the second inner circumferential surface portion of the outer joint pipe.

8. The pipe joint structure according to claim 2, 91further comprising a fixing portion configured to fix the split bodies adjacent to each other in the circumferential direction.

9. The pipe joint structure according to claim 8, wherein
the fixing portion includes a projecting portion protruding from one split body toward another split body of the split bodies adjacent to each other in the circumferential direction, and a recess provided on the other split body, and
the split bodies adjacent to each other in the circumferential direction are fixed to each other when the projecting portion fits into the recess.

10. A construction method for connecting, to the pipe joint structure according to claim 2 for connecting a pipe to a flow passage formed in a fluid device, the pipe, the construction method comprising, in the order stated:
a step of placing the one axial side of each of the plurality of split bodies on a radially outer side of an outer circumferential surface of the pipe and combining the plurality of split bodies in the circumferential direction to fit the outer circumferential surface of the pipe onto the first inner circumferential surface portion of the outer joint pipe; and
a step of relatively inserting the inner joint pipe into an inner circumferential side of the outer joint pipe from the other axial side of the outer joint pipe, fitting the first outer circumferential surface portion of the inner joint pipe onto an inner circumferential surface of the pipe, and fitting the second outer circumferential surface portion of the inner joint pipe onto the second inner circumferential surface portion of the outer joint pipe.
